(19) Europäisches Patentamt
European Patent Office
Office européen des brevets

(11) **EP 4 382 867 B1**

(12) **EUROPÄISCHE PATENTSCHRIFT**

(45) Veröffentlichungstag und Bekanntmachung des Hinweises auf die Patenterteilung:
**17.12.2025 Patentblatt 2025/51**

(21) Anmeldenummer: **23213209.2**

(22) Anmeldetag: **30.11.2023**

(51) Internationale Patentklassifikation (IPC):
**G01C 25/00** *(2006.01)* **G01P 21/00** *(2006.01)*

(52) Gemeinsame Patentklassifikation (CPC):
**G01P 21/00; G01C 25/005**

(54) **NUTZUNG EINER KREUZ-SENSITIVITÄT VON UNTERSCHIEDLICHEN INERTIALEN SENSOREN**

USE OF CROSS SENSITIVITY OF DIFFERENT INERTIAL SENSORS

UTILISATION D'UNE SENSIBILITE CROISEE DE DIFFERENTS CAPTEURS INERTIELS

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **01.12.2022 DE 102022131845**

(43) Veröffentlichungstag der Anmeldung:
**12.06.2024 Patentblatt 2024/24**

(73) Patentinhaber: **Deutsches Zentrum für Luft- und Raumfahrt e.V.**
**53227 Bonn (DE)**

(72) Erfinder: **BORGES FARCONI, Leonardo**
**28359 Bremen (DE)**

(74) Vertreter: **Rösler Rasch van der Heide & Partner**
**Bodenseestraße 18**
**81241 München (DE)**

(56) Entgegenhaltungen:
**WO-A1-2022/089650 DE-A1- 102018 220 543**
**US-A1- 2014 372 063**

• **TOBIAS HILLER: "Analysis and Compensation of Cross-Axis Sensitivity in Low-Cost MEMS Inertial Sensors", 2021 IEEE INTERNATIONAL SYMPOSIUM ON INERTIAL SENSORS AND SYSTEMS (INERTIAL), 22 March 2021 (2021-03-22), pages 1 - 4, XP093154227, ISBN: 978-1-7281-5099-4, DOI: 10.1109/ INERTIAL51137.2021.9430454**

**Beschreibung**

Die Erfindung betrifft ein Verfahren zum Kalibrieren einer Anordnung aus inertialen Sensoren mit mindestens zwei unterschiedlichen Sensortypen zum bestimmungsgemäßen Erfassen von mindestens zwei unterschiedlichen physikalischen Größen, sowie eine inertiale Messeinheit mit einer Anordnung aus inertialen Sensoren mit zumindest zwei unterschiedlichen Sensortypen.

Inertiale Messeinheiten (sogenannte IMUs, engl. für "inertial measurement units") dienen dazu, aktuelle kinematische Größen zu erfassen. Größtenteils mechanisch ausgeführt nutzen sie bekannte Effekte, wie den Zusammenhang zwischen Kraft und beschleunigter Masse, die Lagewinkelstabilität von rotierenden Massen (Kreiselstabilität) und Ähnliches, um weiterverarbeitbare Sensorsignale als Antwort auf vorherrschende kinematische Größen zu ermitteln. Auf optischen bzw. relativistischen Effekten basierende inertiale Messeinheiten, beispielsweise zur Bestimmung von Lagewinkeldrehraten mittels Laserkreisel, sind sehr teuer und werden entsprechend selten angewendet; diese sind nur in Nischenanwendungen wie militärischen Flugkörpern mit extrem hohen zu erwartenden Beschleunigungen zu finden.

Die folgenden Informationen ergeben sich aus fachmännischen Überlegungen, anstatt sich notwendigerweise aus einem bestimmten Dokument aus dem Stand der Technik zu ergeben: Wie für andere Sensoren auch ist es Zweck von inertialen Messeinheiten, eine natürlich auftretende Größe zu erfassen und einen verarbeitbaren Signalwert daraus zu generieren. Naturgemäß weist jeder physische Sensor gewisse Ungenauigkeiten auf, die von Umgebungsbedingungen beeinflusst werden können und insbesondere über verschiedene Bereiche von Messgrößen und/oder Frequenzen der Messgrößen variieren. Ein Sensor weist damit eine gewisse Übertragungsfunktion (im algebraischen wie im dynamischen Sinne) auf, welche eine Abbildung der natürlich auftretenden Größe auf das verarbeitbare Sensorsignal darstellt.

Eine solche Übertragungsfunktion kann mit mathematischen Modellen beschrieben werden. Eine Vielzahl von Modelltypen kommt hierfür prinzipiell in Frage, seien es Modelle in Form von algebraischen Gleichungen oder dynamische Modelle, welche eine frequenzabhängige Übertragungsfunktion beschreiben und damit bevorzugt als Differentialgleichungen oder als Gleichungen im Frequenzbereich (wie dem Laplace Bereich) formuliert werden. Es sind ferner lineare Modelle von nichtlinearen Modellen zu unterscheiden. Statistische Modelle erlauben es, viele einzelne empirische Daten in ein Modell zusammenzufassen. Je genauer ein Modell die Realität des Sensors abbildet, umso besser ist der vom jeweiligen Sensor eingebrachte Fehler in der Übertragung von der natürlich auftretenden Größe auf das verarbeitbare Sensorsignal korrigierbar.

Mit dem Ziel, Sensorfehler von IMU Sensoren wie Beschleunigungssensoren oder Drehratensensoren oder Lagewinkelsensoren zu reduzieren, wurden und werden typischerweise solche Beschleunigungssensoren zur Charakterisierung im Sinne einer Systemidentifikation getestet, um mittels der Charakterisierung und dem damit erreichten Wissen über Übertragungsfehler der Beschleunigungen im späteren Betrieb zu eliminieren, d. h. um die jeweiligen Sensoren zu kalibrieren. Eine relativ einfache Modellbeschreibung der Übertragungsfehler eines Beschleunigungssensors besteht in der Aufteilung der Übertragungsfehler in die Anteile "Skalierungsfehler", "Bias", und "weißes Rauschen" (sogenannter "white noise").

Darüber hinaus können Effekte beschrieben werden, die über die gewünschte und primär erwartete Sensorfunktion hinausgehen. D. h., dass Anteile von verarbeitbaren Sensorsignalen (also die Antworten des Sensors auf eine Anregung) modelliert werden können, welche in einer idealen Welt nicht auftreten, da der Sensor nicht bewusst und mit dem Ziel konstruiert und konfiguriert wurde, solche Antworten zu geben. Solche nicht primär erwarteten aber trotzdem natürlicherweise auftretenden Sensorantworten führen zur sogenannten Kreuz-Sensitivität eines Sensors. Ein Beispiel für eine solche Kreuz-Sensitivität ist der Erhalt einer Sensorantwort eines Drehratensensors auf eine translatorisch oszillierende Beschleunigung.

Die DE 10 2018 220 543 A1 betrifft ein Verfahren zum Kalibrieren eines zumindest zweiachsigen Sensors, umfassend die Schritte: Zumindest ein definiertes Anregen des Sensors pro Anregungsrichtung für mehrere Anregungsrichtungen, wobei die Anregungsrichtungen unterschiedlich sind, wobei die Anzahl der Anregungsrichtungen zumindest der Anzahl der Achsen des Sensors entspricht, Messen aller Werte entlang aller Achsen für jedes einzelne Anregen, Ermitteln von Querempfindlichkeiten aus den gemessenen Werten, Berechnen von Korrekturparametern aus den ermittelten Querempfindlichkeiten, Bereitstellen der Korrekturparameter für einen Signalpfad des Sensors zur Ausgabe von korrigierten Messwerten.

Die US 2014/0372063 A1 betrifft außerdem ein Schnellkalibrierungsverfahren für eine Trägheitsmesseinheit (IMU), mit den Schritten: Schritt 1) Nach dem Aufwärmen eines Trägheitsmesssystems wird bestimmt, ob ein anfänglicher horizontaler Lagewinkel der IMU bekannt ist; wenn ja, ist mit Schritt 3 fortzufahren; und wenn nein, mit Schritt 2; Schritt 2) Die IMU wird für einen Zeitraum in einem statischen Zustand gehalten und der anfängliche horizontale Lagewinkel der IMU wird ungefähr gemäß den Messinformationen eines Beschleunigungsmessers und eines Kreisels während des Zeitraums berechnet. Schritt 3) Ein anfänglicher Kurswinkel der IMU wird nach dem Zufallsprinzip festgelegt; und Schritt 4) Die IMU wird um ein Messzentrum davon gedreht, und die zu schätzenden Gyro- und Beschleunigungsmesser-Fehlerkoeffizienten werden auf der Grundlage des bekannten anfänglichen horizontalen Lagewinkels oder des anfänglichen horizontalen Lagewinkels, der in Schritt 2 erhalten wurde, und des anfänglichen Kurswinkels, der in Schritt 3 erhalten wurde, berechnet, wobei während der Berechnung sowohl die Positionsänderung als auch die Geschwindigkeitsänderung der IMU auf Null gesetzt werden, und stellen jeweils Pseudopositionsbeobachtungsinformationen und Pseudogeschwindigkeitsbeobachtungsinformationen dar.

Aufgabe der Erfindung ist es, eine Anordnung aus inertialen Sensoren mit verbesserten Messeigenschaften zu schaffen.

Die Erfindung ergibt sich aus den Merkmalen der unabhängigen Ansprüche. Vorteilhafte Weiterbildungen und Ausgestaltungen sind Gegenstand der abhängigen Ansprüche.

Ein erster Aspekt der Erfindung betrifft ein Verfahren zum Kalibrieren einer Anordnung aus inertialen Sensoren mit mindestens zwei unterschiedlichen Sensortypen zum bestimmungsgemäßen Erfassen von mindestens zwei unterschiedlichen physikalischen Größen, aufweisend die Schritte:

- Ermitteln einer Charakterisierung eines ersten inertialen Sensors eines ersten Sensortyps bezüglich seiner Haupt-Sensitivität auf die durch ihn bestimmungsgemäß zu erfassende erste physikalische Größe;
- Ermitteln einer Charakterisierung eines zweiten inertialen Sensors eines zweiten Sensortyps bezüglich seiner Haupt-Sensitivität auf die durch ihn bestimmungsgemäß zu erfassende zweite physikalische Größe;
- Ermitteln einer Charakterisierung des ersten inertialen Sensors bezüglich seiner Kreuz-Sensitivität auf die durch ihn nicht bestimmungsgemäß zu erfassende zweite physikalische Größe;
- Ermitteln einer Charakterisierung des zweiten inertialen Sensors bezüglich seiner Kreuz-Sensitivität auf die durch ihn nicht bestimmungsgemäß zu erfassende erste physikalische Größe, wobei die jeweilige Charakterisierung ein modelliertes Übertragungsverhalten eines jeweiligen inertialen Sensors von einer jeweiligen vorherrschenden erfassbaren physikalischen Größe auf ein jeweiliges verarbeitbares Sensorsignal angibt;
- Erstellen eines jeweiligen Sensormodells auf Basis der jeweiligen Charakterisierung,
- Integrieren der Sensormodelle in ein gemeinsames Fusionsmodell, wobei das Fusionsmodell eine Übertragung eines Eingangsvektors umfassend die sowohl am ersten inertialen Sensor als auch am zweiten inertialen Sensor jeweils erfassten physikalischen Größen auf einen Ausgangsvektor umfassend das jeweilige verarbeitbare Sensorsignal eines jeweiligen Sensors als Antwort auf die in Haupt-Sensitivität und in Kreuz-Sensitivität jeweils erfassten physikalischen Größen angibt; und
- Ermitteln eines Kalibriermodells oder Kalibrieralgorithmus auf Basis des Fusionsmodells, wobei das Kalibriermodell bzw. der Kalibrieralgorithmus die Umkehrung des Fusionsmodells ist, sodass eine Eingangsgröße des Kalibriermodells aus verarbeitbaren Sensorsignalen des ersten inertialen Sensors und des zweiten inertialen Sensors zu einer Schätzung der tatsächlich vorherrschenden physikalischen Größen als Ausgangsgröße des Kalibriermodells bzw. des Kalibrieralgorithmus führt, wobei die Schätzung zumindest um reproduzierbare Sensorfehler kompensiert wird.

Dass das Fusionsmodell einen Eingangsvektor aufweist, der sowohl am ersten inertialen Sensor als auch am zweiten inertialen Sensor jeweils erfasste physikalische Größen umfasst, bedeutet insbesondere, dass die erste physikalische Größe und die zweite physikalische Größe wie sie am ersten inertialen Sensor erfasst werden, wie auch die erste physikalische Größe und die zweite physikalische Größe wie sie am zweiten inertialen Sensor erfasst werden, Teil des Eingangsvektors sind.

Beim Erstellen eines jeweiligen Sensormodells auf Basis der jeweiligen Charakterisierung wird bevorzugt berücksichtigt, ob die Sensormodelle auf unterschiedliche Koordinatensysteme bezogen sind. Wenn die Sensormodelle auf unterschiedliche Koordinatensysteme bezogen sind, erfolgt insbesondere ein Transformieren der Sensormodelle, sodass erfasste physikalische Größen wie auch die verarbeitbaren Sensorsignale auf ein jeweils gemeinsames Referenzkoordinatensystem bezogen sind. Bevorzugt ist das gemeinsame Referenzkoordinatensystem körperfest zu einem Gehäuse der Anordnung aus inertialen Sensoren.

Das Fusionsmodell wird bevorzugt in einer Art dargestellt, dass es direkt invertierbar ist und als Kalibriermodell verwendet werden kann. Alternativ wird ein Kalibrieralgorithmus verwendet, beispielsweise ein Kalmanfilter, sei es ein linearer oder ein nichtlinearer Kalmanfilter. Der Kalibrieralgorithmus weist im Gegensatz zum Kalibriermodell eine Sequenz von Instruktionen auf. Diese Instruktionen können auch rekursive Abläufe aufweisen.

Reproduzierbare Sensorfehler sind Sensorfehler, die unabhängig von Umgebungsbedingungen und unabhängig von gegenwärtigen Eigenschaften der erfassten physikalischen Größen sind, und damit unabhängig vom Zeitpunkt der Messung auftreten. Nicht-reproduzierbare Sensorfehler hingegen sind variabel, und können insbesondere durch statistische Größen wie beispielsweise einen Mittelwert und eine Standardabweichung darum beschrieben werden. Typischerweise sind solche nicht-reproduzierbaren Sensorfehler daher vom Zeitpunkt abhängig. Beispiele für reproduzierbare Sensorfehler können Biases, Ausrichtungsfehler oder Ausrichtungsabweichungen (sogenannte "misalignments"), Skalenfaktoren, sein.

Die inertialen Sensoren weisen jeweils einen bestimmten Sensortyp auf. Ein Sensortyp ist beispielsweise eines aus: Translationaler Beschleunigungssensor, Drehratensensor; der Sensortyp bestimmt somit insbesondere die Bauweise des Sensors, die dazu ausgelegt ist, eine bestimmte physikalische Größe bestimmungsgemäß zu erfassen. Der Begriff "bestimmungsgemäß" bedeutet in diesem Zusammenhang, dass der Sensor zum Erfassen dieser physikalischen Größe bewusst ausgelegt worden ist, und in dieser Haupt-Sensitivität naturgemäß genau diese physikalische Größe, die dadurch gemessen werden soll, typischerweise den größten Anteil im verarbeitbaren Sensorsignal ausmacht. Gleichzeitig weisen andere physikalische Größen Einflüsse auf das verarbeitbare Sensorsignal auf, in der sogenannten Kreuz-Sensitivität, die der Hersteller eines inertialen Sensors typischerweise bemüht ist, so klein wie möglich zu halten. So reagiert beispielsweise der oben genannte translationale Beschleunigungssensor auch auf Drehraten, wie sie in Haupt-Sensitivität vom Drehratensensor gemessen werden, und das verarbeitbare Sensorsignal des Drehratensensors weist auch Anteile von translatorischen Beschleunigungen auf - dies sind die sogenannten Kreuz-Sensitivitäten, die die Übertragung von "nicht-bestimmungsgemäß" zu erfassenden physikalischen Größen auf das verarbeitbare Sensorsignal eines Sensors beschreiben.

Vorteilhaft werden erfindungsgemäß neben den Haupt-Sensitivitäten diese Kreuz-Sensitivitäten mitbenutzt, um eine bessere Schätzung der tatsächlich vorherrschenden physikalischen Größen zu ermitteln. Hierfür wird vorteilhaft ein Kalibrieralgorithmus oder Kalibriermodell aus einem Fusionsmodell gewonnen, wobei das Fusionsmodell auf identifizierten Übertragungen der inertialen Sensoren von unterschiedlichen Sensortypen basiert, und das Kalibriermodell bzw. der Kalibrieralgorithmus diese identifizierten Informationen (sogenannte Charakterisierungen) in ihrer Umkehrung verwendet, um aus den im späteren Betrieb des jeweiligen inertialen Sensors erzeugten verarbeitbaren Sensorsignalen (die Sensorausgänge) der inertialen Sensoren eine Schätzung der tatsächlich vorherrschenden physikalischen Größen in einer Qualität zu gewinnen, wie sie nicht möglich ist, wenn ein jeweiliger inertialer Sensor alleinstehend verwendet wird und alleinig aufgrund seines eigenen verarbeitbaren Sensorsignals auf die tatsächlich vorherrschende physikalische Größe aufgrund seiner Haupt-Sensitivität geschlossen wird. Durch die Berücksichtigung von Haupt-Sensitivitäten und Kreuz-Sensitivitäten wird somit eine Eingangsgrößen-Schätzverfahren angewendet, welches sich auf Sensorfusion stützt. Als Ergebnis der Anwendung des Kalibriermodells bzw. des Kalibrieralgorithmus (insbesondere im späteren Dauerbetrieb der kalibrierten IMU) wird somit nur genau ein Wert für die Schätzung einer jeweiligen zu erfassenden physikalischen Größe (bzw. Komponente im Falle einer vektoriellen Größe) erhalten, obwohl mehrere Quellen dafür mittels der Kreuz- Sensitivität verwendet werden - dies entspricht dem Kerngedanken einer Sensorfusion.

In anderen Worten wird nach dem Verfahren gemäß dem ersten Aspekt der Erfindung ein Algorithmus zur Schätzung eines Systemeingangs erzeugt. Dies wird durch den fertigen Kalibrieralgorithmus bzw. das Kalibriermodell erreicht. Der Kalibrieralgorithmus wird beispielsweise dazu verwendet, eine beispielsweise dreiachsige Größe zu schätzen, und zwar in einem Koordinatensystem basierend auf den auf verschiedenen Wegen erzeugten verarbeitbaren Sensorsignalen.

Gemäß einer vorteilhaften Ausführungsform werden zwei inertiale Sensoren mit unterschiedlichen Sensortypen zum Erfassen von mehr als zwei unterschiedlichen physikalischen Größen verwendet. Gemäß dieser Ausführungsform werden beispielsweise genau zwei inertiale Sensoren verwendet, welche einen unterschiedlichen Sensortyp aufweisen und damit zwei unterschiedliche Haupt-Sensitivitäten aufweisen; es werden jedoch mehr als zwei physikalische Größen je Sensor betrachtet.

Es werden im folgenden Sonderfall neben der jeweiligen Haupt-Sensitivität nicht nur der Einfluss der von einem inertialen Sensor bestimmungsgemäß zu messenden physikalischen Größe auf das verarbeitbare Sensorsignal des anderen inertialen Sensors betrachtet, sondern auch beispielsweise Größen eines dritten, nicht-inertialen Sensors wie Temperatur, Druck, oder anderes;

Gemäß einer weiteren vorteilhaften Ausführungsform weist das Verfahren weiterhin die Schritte auf:

-    Ermitteln einer Charakterisierung eines dritten nicht-inertialen Sensors eines dritten Sensortyps bezüglich seiner Haupt-Sensitivität auf die durch ihn bestimmungsgemäß zu erfassende dritte physikalische Größe;
-    Ermitteln einer Charakterisierung des ersten inertialen Sensors bezüglich seiner Kreuz-Sensitivität auf die durch ihn nicht bestimmungsgemäß zu erfassende dritte physikalische Größe;

wobei das Integrieren der Sensormodelle in ein gemeinsames Fusionsmodell so erfolgt, dass das Fusionsmodell eine Übertragung eines Eingangsvektors umfassend die sowohl am ersten inertialen Sensor als auch am zweiten inertialen Sensor als auch am dritten nicht-inertialen Sensor jeweils erfassten physikalischen Größen auf einen Ausgangsvektor umfassend das jeweilige verarbeitbare Sensorsignal eines jeweiligen Sensors als Antwort auf die in Haupt-Sensitivität und in Kreuz-Sensitivität jeweils erfassten physikalischen Größen angibt; und wobei das Kalibriermodell bzw. der Kalibrieralgorithmus auf Basis des Fusionsmodells so ermittelt wird, dass eine Eingangsgröße des Kalibriermodells aus verarbeitbaren Sensorsignalen des ersten inertialen Sensors und des zweiten inertialen Sensors und des dritten nicht-inertialen Sensors zu einer Schätzung der tatsächlich vorherrschenden physikalischen Größen als Ausgangsgröße des Kalibriermodells bzw. des Kalibrieralgorithmus führt, wobei die Schätzung zumindest um reproduzierbare Sensorfehler kompensiert wird.

Demnach werden nicht nur die Kreuzsensitivitäten zwischen den zumindest zwei inertialen Sensoren aufeinander berücksichtigt, sondern noch eine zusätzliche Kreuzsensitivität eines nicht-inertialen Sensors auf zumindest einen der inertialen Sensoren. Diese Kreuzsensitivität wird demnach im Fusionsmodell explizit berücksichtigt.

Gemäß einer weiteren vorteilhaften Ausführungsform schätzt das Kalibriermodell bzw. der Kalibrieralgorithmus nicht-reproduzierbare Sensorfehler, wobei die Schätzung der Ausgangsgröße um reproduzierbare und nicht-reproduzierbare Sensorfehler kompensiert wird.

Gemäß einer weiteren vorteilhaften Ausführungsform werden mehrere erste inertiale Sensoren und/oder mehrere zweite inertiale Sensoren verwendet. Demnach sind mehrere inertiale Sensoren eines ersten Typs und/oder mehrere inertiale Sensoren eines zweiten Typs vorgesehen. Immer dann, wenn mehr inertiale Sensoren des gleichen Typs verwendet werden, als die Dimension des zugrunde liegenden Problems groß ist, wird von redundanten Sensoren gesprochen. Beispiele hierfür sind zwei translationale Sensoren des gleichen Typs zur Messung einer physikalischen Größe mit der Skala entlang einer Geraden, oder analog hierzu vier Sensoren des gleichen Typs in verschiedenen Ausrichtungen für ein dreidimensionales Problem. Die Vielzahl der inertialen Sensoren weist bevorzugt jeweils Gruppen von zueinander redundanten Sensoren auf, die jeweils dieselbe physikalisch erfassbare Größe erfassen. Bevorzugt weisen die Sensoren dieser Gruppe Gemeinsamkeiten in der Kreuz-Sensitivität untereinander auf.

Insbesondere werden für inertiale Messungen mindestens so viele einzelne Sensoren verwendet, wie die Zahl der Sensor-Achsen beträgt, an denen Messgrößen zu erfassen sind. Beispielsweise kann es im Falle einer dreiachsigen Beschleunigungsmessung an einem Beschleunigungssensor notwendig sein, mindestens drei Achsen zu verwenden, welche in linear unabhängige Orientierungen zueinander ausgerichtet sind, entlang derer Messungen erfolgen. Eine Kalibriereinheit zum Ausführen des erfindungsgemäßen Verfahrens kann dabei innerhalb einer zu kalibrierenden inertialen Messeinheit angeordnet sein, oder außerhalb als Teil eines weiteren Rechners. Als Ergebnis der Berechnung der Kalibriereinheit werden die getrennten physikalischen Größen mit vorgegebenem Bezug erhalten.

Gemäß einer weiteren vorteilhaften Ausführungsform wird bei Verwendung von redundanten Sensoren ein derartiges Kalibriermodell bzw. ein Kalibrieralgorithmus verwendet, dass Beobachtbarkeit von nicht-reproduzierbaren Sensorfehlern für jeden der redundanten Sensoren vorliegt, indem der Nullraum des Fusionsmodells verwendet wird.

Gemäß einer weiteren vorteilhaften Ausführungsform umfasst der Kalibrieralgorithmus folgende Schritte:

- Schätzen der physikalischen Größen durch Invertieren des Fusionsmodells unter Verwendung der verarbeitbaren Sensorsignale, und
- In den Schätzungen der physikalischen Größen: Kompensieren der reproduzierbaren und nicht-reproduzierbaren Sensorfehler mittels eines Kalman Filters angewendet auf die Abweichung zwischen den erwarteten Sensorsignalen basierend auf dem Fusionsmodell und den tatsächlichen Sensorsignalen.

Das Schätzen der physikalischen Größen entspricht dem Schätzen eines Systemeingangs der inertialen Sensoren, es wird somit eine Eingangsgrößenschätzung, insbesondere eine Zustandsraumeingangsgrößen-Schätzung durchgeführt. Wird das Fusionsmodell invertiert, wird insbesondere die gewichtete Pseudo-Inverse des Fusionsmodells verwendet.

Gemäß einer weiteren vorteilhaften Ausführungsform ist der erste Sensortyp ein translatorischer Beschleunigungssensor zum Erfassen einer translatorischen Beschleunigung und der zweite Sensortyp ein Kreiselinstrument zum Erfassen einer Drehbewegung.

Gemäß einer weiteren vorteilhaften Ausführungsform wird für das jeweilige Sensormodell eines aus den folgenden verwendet: Nichtlineares Zustandsraummodell, zu einem linearen Zustandsraummodell linearisierte nichtlineare Dynamik, quasi-linear-zeitvariantes Modell, lineares Zustandsraummodell.

Ein weiterer Aspekt der Erfindung betrifft eine inertiale Messeinheit (IMU) mit einer Anordnung aus inertialen Sensoren mit zumindest zwei unterschiedlichen Sensortypen, die bestimmungsgemäß zum Erfassen mindestens zweier unterschiedlicher physikalischer Größen dienen, und mit einer Recheneinheit, die dazu ausgeführt ist, verarbeitbare Sensorsignale der inertialen Sensoren zu erfassen und in ein Kalibriermodell oder einen Kalibrieralgorithmus, welches/r wie oben und im Folgenden beschrieben erzeugt wurde, zu überführen und das Kalibriermodell bzw. den Kalibrieralgorithmus auszuführen, wobei ein Eingangsvektor des Kalibriermodells bzw. des Kalibrieralgorithmus das verarbeitbare Sensorsignal eines ersten inertialen Sensors eines ersten Sensortyps sowie das verarbeitbare Sensorsignal eines zweiten inertialen Sensors eines zweiten Sensortyps umfasst, wobei das verarbeitbare Sensorsignal des ersten inertialen Sensors Anteile bezüglich seiner Haupt-Sensitivität auf die durch ihn bestimmungsgemäß zu erfassende erste physikalische Größe und bezüglich seiner Kreuz-Sensitivität auf die durch ihn nicht bestimmungsgemäß zu erfassende zweite physikalische Größe umfasst, wobei das verarbeitbare Sensorsignal des zweiten inertialen Sensors Anteile bezüglich seiner Haupt-Sensitivität auf die durch ihn bestimmungsgemäß zu erfassende zweite physikalische Größe und bezüglich seiner Kreuz-Sensitivität auf die durch ihn nicht bestimmungsgemäß zu erfassende erste physikalische Größe umfasst, wobei das Kalibriermodell bzw. der Kalibrieralgorithmus eine Sensorfusion der durch Haupt-Sensitivitäten und Kreuz-Sensitivitäten gebildeten verarbeitbaren Sensorsignale der inertialen Sensoren unter Berücksichtigung der Haupt-Sensitivitäten und Kreuz-Sensitivitäten durchführt, wobei ein Ausgangsvektor des Kalibriermodells bzw. Kalibrieralgorithmus eine einzige jeweilige Schätzung der tatsächlichen ersten und zweiten physikalischen Größe umfasst, wobei die Schätzung zumindest um reproduzierbare Sensorfehler kompensiert wird.

Vorteile und bevorzugte Weiterbildungen der vorgeschlagenen inertialen Messeinheit ergeben sich durch eine analoge und sinngemäße Übertragung der im Zusammenhang mit dem vorgeschlagenen Verfahren vorstehend gemachten Ausführungen.

Ein weiterer Aspekt der Erfindung betrifft ein Verfahren zum Kalibrieren einer Anordnung aus Sensoren mit mindestens zwei unterschiedlichen Sensortypen zum bestimmungsgemäßen Erfassen von mindestens zwei unterschiedlichen physikalischen Größen, wobei ein erster der Sensoren ein inertialer Sensor ist und ein zweiter der Sensoren ein nicht-inertialer Sensor ist, aufweisend die Schritte:

- Ermitteln einer Charakterisierung des ersten inertialen Sensors eines ersten Sensortyps bezüglich seiner Haupt-Sensitivität auf die durch ihn bestimmungsgemäß zu erfassende erste physikalische Größe;
- Ermitteln einer Charakterisierung des zweiten nicht-inertialen Sensors eines zweiten Sensortyps bezüglich seiner Haupt-Sensitivität auf die durch ihn bestimmungsgemäß zu erfassende zweite physikalische Größe;
- Ermitteln einer Charakterisierung des ersten inertialen Sensors bezüglich seiner Kreuz-Sensitivität auf die durch ihn nicht bestimmungsgemäß zu erfassende zweite physikalische Größe;
- Ermitteln einer Charakterisierung des zweiten nicht-inertialen Sensors bezüglich seiner Kreuz-Sensitivität auf die durch ihn nicht bestimmungsgemäß zu erfassende erste physikalische Größe;
  wobei die jeweilige Charakterisierung ein modelliertes Übertragungsverhalten eines jeweiligen inertialen Sensors von einer jeweiligen vorherrschenden erfassbaren physikalischen Größe auf ein jeweiliges verarbeitbares Sensorsignal angibt;
- Erstellen eines jeweiligen Sensormodells auf Basis der jeweiligen Charakterisierung;
- Integrieren der Sensormodelle in ein gemeinsames Fusionsmodell, wobei das Fusionsmodell eine Übertragung eines Eingangsvektors umfassend die sowohl am ersten inertialen Sensor als auch am zweiten nicht-inertialen Sensor jeweils erfassten physikalischen Größen auf einen Ausgangsvektor umfassend das jeweilige verarbeitbare Sensorsignal eines jeweiligen Sensors als Antwort auf die in Haupt-Sensitivität und in Kreuz-Sensitivität jeweils erfassten physikalischen Größen angibt; und
- Ermitteln eines Kalibriermodells oder Kalibrieralgorithmus auf Basis des Fusionsmodells, wobei das Kalibriermodell bzw. der Kalibrieralgorithmus die Umkehrung des Fusionsmodells ist, sodass eine Eingangsgröße des Kalibriermodells aus verarbeitbaren Sensorsignalen des ersten inertialen Sensors und des zweiten nicht-inertialen Sensors zu einer Schätzung der tatsächlich vorherrschenden physikalischen Größen als Ausgangsgröße des Kalibriermodells bzw. des Kalibrieralgorithmus führt, wobei die Schätzung zumindest um reproduzierbare Sensorfehler kompensiert wird.

Im Gegensatz zum ersten Aspekt der Erfindung wird bei diesem Aspekt der Erfindung nicht notwendigerweise eine Anordnung aus mindestens zwei inertialen Sensoren betrachtet, es kann vielmehr auch nur ein einzelner inertialer Sensor vorliegen und im Zusammenhang mit einem zweiten nicht-inertialen Sensor betrachtet werden. Das Schema des ersten Aspekts der Erfindung wird lediglich mit einem zweiten nicht-inertialen Sensor (beispielsweise für Druck, Temperatur, etc.) ausgeführt, wobei alles prinzipiell Gesagte - mutatis mutandis - im Bezug auf den ersten Aspekt der Findung auf diesen Aspekt Erfindung übertragen werden kann.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen.

Es zeigen:

Fig. 1:     Ein Verfahren zum Kalibrieren einer Anordnung aus inertialen Sensoren mit mindestens zwei unterschiedlichen Sensortypen gemäß einem Ausführungsbeispiel der Erfindung.

Fig. 2:     Eine inertiale Messeinheit gemäß einem Ausführungsbeispiel der Erfindung.

Fig. 3:     Ein Verfahren zum Erzeugen eines Kalibriermodells zur Anwendung in einer inertialen Messeinheit gemäß einem Ausführungsbeispiel der Erfindung.

Die Darstellungen in den Figuren sind schematisch und nicht maßstäblich.

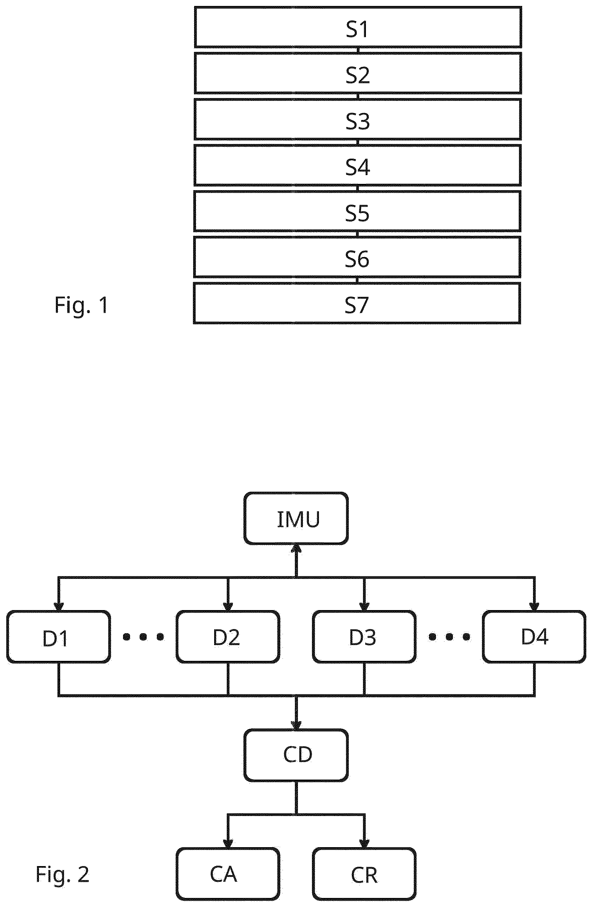

Fig. 1 zeigt ein Verfahren zum Kalibrieren einer Anordnung aus inertialen Sensoren mit mindestens zwei unterschiedlichen Sensortypen zum bestimmungsgemäßen Erfassen von mindestens zwei unterschiedlichen physikalischen Größen, aufweisend die Schritte:

- Ermitteln S1 einer Charakterisierung eines ersten inertialen Sensors eines ersten Sensortyps bezüglich seiner Haupt-Sensitivität auf die durch ihn bestimmungsgemäß zu erfassende erste physikalische Größe;

- Ermitteln S2 einer Charakterisierung eines zweiten inertialen Sensors eines zweiten Sensortyps bezüglich seiner Haupt-Sensitivität auf die durch ihn bestimmungsgemäß zu erfassende zweite physikalische Größe;
- Ermitteln S3 einer Charakterisierung des ersten inertialen Sensors bezüglich seiner Kreuz-Sensitivität auf die durch ihn nicht bestimmungsgemäß zu erfassende zweite physikalische Größe;
- Ermitteln S4 einer Charakterisierung des zweiten inertialen Sensors bezüglich seiner Kreuz-Sensitivität auf die durch ihn nicht bestimmungsgemäß zu erfassende erste physikalische Größe,
  wobei die jeweilige Charakterisierung ein modelliertes Übertragungsverhalten eines jeweiligen inertialen Sensors von einer jeweiligen vorherrschenden erfassbaren physikalischen Größe auf ein jeweiliges verarbeitbares Sensorsignal angibt;
- Erstellen S5 eines jeweiligen Sensormodells auf Basis der jeweiligen Charakterisierung,
- Integrieren S6 der Sensormodelle in ein gemeinsames Fusionsmodell, wobei das Fusionsmodell eine Übertragung eines Eingangsvektors umfassend die sowohl am ersten inertialen Sensor als auch am zweiten inertialen Sensor jeweils erfassten physikalischen Größe auf einen Ausgangsvektor umfassend das jeweilige verarbeitbare Sensorsignal eines jeweiligen Sensors als Antwort auf die in Haupt-Sensitivität und in Kreuz-Sensitivität jeweils erfassten physikalischen Größen angibt; und
- Ermitteln S7 eines Kalibriermodells oder Kalibrieralgorithmus auf Basis des Fusionsmodells, wobei das Kalibriermodell bzw. der Kalibrieralgorithmus die Umkehrung des Fusionsmodells ist, sodass eine Eingangsgröße des Kalibriermodells aus verarbeitbaren Sensorsignalen des ersten inertialen Sensors und des zweiten inertialen Sensors zu einer Schätzung der tatsächlich vorherrschenden physikalischen Größen als Ausgangsgröße des Kalibriermodells bzw. des Kalibrieralgorithmus führt, wobei die Schätzung der Ausgangsgröße zumindest um reproduzierbare Sensorfehler kompensiert wird.

Fig. 2 zeigt die Struktur einer inertialen Messeinheit IMU mit einer Anordnung aus inertialen Sensoren mit zumindest zwei unterschiedlichen Sensortypen, die bestimmungsgemäß zum Erfassen mindestens zweier unterschiedlicher physikalischer Größen dienen, wobei die Recheneinheit dazu ausgeführt ist, verarbeitbare Sensorsignale der inertialen Sensoren zu erfassen und in ein Kalibriermodell oder einen Kalibrieralgorithmus, welches/r insbesondere erzeugt wurde, zu überführen und das Kalibriermodell bzw. den Kalibrieralgorithmus auszuführen, wobei ein Eingangsvektor des Kalibriermodells bzw. des Kalibrieralgorithmus das verarbeitbare Sensorsignal eines ersten inertialen Sensors eines ersten Sensortyps sowie das verarbeitbare Sensorsignal eines zweiten inertialen Sensors eines zweiten Sensortyps umfasst, wobei das verarbeitbare Sensorsignal des ersten inertialen Sensors Anteile bezüglich seiner Haupt-Sensitivität auf die durch ihn bestimmungsgemäß zu erfassende erste physikalische Größe und bezüglich seiner Kreuz-Sensitivität auf die durch ihn nicht bestimmungsgemäß zu erfassende zweite physikalische Größe umfasst, wobei das verarbeitbare Sensorsignal des zweiten inertialen Sensors Anteile bezüglich seiner Haupt-Sensitivität auf die durch ihn bestimmungsgemäß zu erfassende zweite physikalische Größe und bezüglich seiner Kreuz-Sensitivität auf die durch ihn nicht bestimmungsgemäß zu erfassende erste physikalische Größe umfasst, wobei das Kalibriermodell bzw. der Kalibrieralgorithmus eine Sensorfusion der durch Haupt-Sensitivitäten und Kreuz-Sensitivitäten gebildeten verarbeitbaren Sensorsignale der inertialen Sensoren unter Berücksichtigung der Haupt-Sensitivitäten und Kreuz-Sensitivitäten durchführt, wobei ein Ausgangsvektor des Kalibriermodells bzw. Kalibrieralgorithmus eine jeweilige Schätzung der tatsächlichen ersten und zweiten physikalischen Größe umfasst. Fig. 2 zeigt eine beispielhafte Architektur für eine Struktur der IMU, um die IMU mit dem Kalibriermodell bzw. dem Kalibrieralgorithmus, gewonnen nach dem Verfahren nach Fig. 1 zu betreiben. Zur Ausführung des Kalibriermodells bzw. des Kalibrieralgorithmus dient eine Kalibriereinheit CD. Für die inertiale Sensoreinheit IMU werden hierin die Beschleunigungssensoren D1 bis D2 zur Ermittlung von translatorischen Beschleunigungen sowie die Kreiselinstrumente D3 bis D4 zur Ermittlung von Drehraten und/oder Lagewinkeln als jeweilige inertiale Sensoren verwendet. Als Ergebnis der Berechnung der Kalibriereinheit CD werden getrennt die physikalischen Größen erhalten, nämlich die kompensierte dreiachsige Beschleunigung CA und die kompensierte dreiachsige Drehrate CR, jeweils in einem vorgegebenem Bezugssystem.

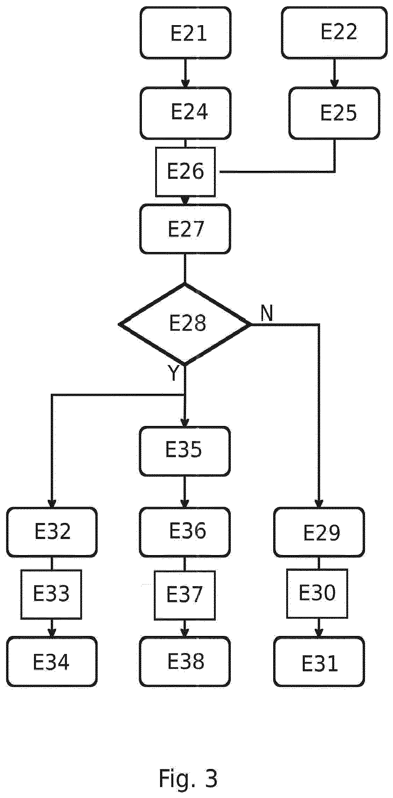

Um das Kalibriermodell mit seinen Parametern zu erhalten, ist eine bestimmte algorithmische Vorgehensweise notwendig, wie in Fig. 3 erläutert. Fig. 3 zeigt ein Verfahren, um das Kalibriermodell zu erhalten. Am Startpunkt E20 werden die inertialen Sensoren dahingehend charakterisiert (d. h. durch Systemidentifikation eine Struktur und entsprechende Parameterwerte ermittelt), dass die Übertragung der physikalischen Größen auf Sensorantworten als verarbeitbare Signale bekannt sind, die bestimmungsgemäß von dem jeweiligen inertialen Sensor ausgegeben werden. Im Fall von Kreiselinstrumenten und Beschleunigungssensoren betrifft dies die Charakterisierung bezüglich der Drehraten E21 bzw. die Charakterisierung gegenüber Beschleunigungen und Vibrationen E22. Feld E21 betrifft daher die Charakterisierung von Gyroskopen gegen Rotationen, Feld E22 die Charakterisierung von Beschleunigungssensoren gegen Beschleunigungen und Vibrationen.

Im weiteren Schritt E23 wird, wenn möglich, die Kreuz-Sensitivität eines jeweiligen Sensors analysiert, indem diejenigen Sensorantworten betrachtet werden, für die der jeweilige Sensor bestimmungsgemäß nicht ausgelegt wurde.

Entsprechende physikalisch messbare Größe der Sensoren werden mittels des Übertragungsverhaltens charakterisiert, für die der Sensor nicht ausgelegt werden, die naturgemäß jedoch auftreten. Im Falle von Kreiselinstrumenten und Beschleunigungen betrifft dies die Charakterisierung der Kreiselinstrumente gegenüber Beschleunigungen E23 und die Charakterisierung von Beschleunigungssensoren gegenüber Rotationen E25. Die Felder E23 und E25 betreffen daher die Sensor Charakterisierung der Sensitivität auf andere als vorgesehene physikalische Größen sowie in E25 die Charakterisierung von Beschleunigungssensoren gegenüber Rotationen. Das Feld E24 betrifft die Charakterisierung von Kreiselinstrumenten gegenüber Vibrationen. Die Informationen der Felder E23, E24, und E25 werden dann verwendet, um Sensormodelle E26 zu erhalten, die diskretisiert werden können, um sie direkt in digitalen Systemen verwenden zu können.

Diese Modelle werden bevorzugt auf die jeweiligen Sensorachsen bezogen. Sie werden anschließend im Schritt E27 auf dieses Bezugssystem bezogen, welches für die gewünschte physikalische Größe, die gemessen werden soll, zweckdienlich ist. Im Falle von Beschleunigungssensoren und Kreiselinstrumente wäre das das Referenzkoordinatensystem der inertialen Sensoreinheit IMU, in der die einzelnen Sensoren untergebracht sind. Das Ergebnis dieser Koordinatensystem-Transformation E27 für die Modelle dienen dann für Sensorgleichungen, die alle auf dasselbe Bezugssystem geschrieben werden und auf die selben physikalischen Größen bezogen sind, beispielsweise die Beschleunigungen auf drei Achsen und Drehraten. In E28 wird entschieden, ob ein nichtlineares Modell verwendet werden soll oder (auch) die Schätzung von bilinearen Termen erfolgen soll; wenn nein (Zweig N), wird mit Schritt E29 fortgefahren, wenn ja (Zweig Y), mit der Modelllinearisierung E35 und der Umschreibung des Modells in eine nichtlineare Zustandsraumdarstellung E32.

Ist das Sensormodell Input-affin und ist es nicht notwendig multiplikative Terme wie Skalenterme zu schätzen, sollte das Modell in eine reguläre, lineare Zustandsraummodellstruktur E30 transformiert werden E29. Die Zustände in diesem Zustandsraummodell beziehen sich auf Ableitungen der Eingangsgrößen im Falle eines dynamischen Modells, nicht-weißes Rauschen kann bei Bedarf gefiltert werden, und zusätzliches Prozessrauschen addiert werden, wobei ferner die Gleichungen der Messungen den Sensorgleichungen entsprechen. Hierbei sind die physikalisch messbaren Eingangsgrößen für die Gleichungen der Messungen alle Sensoren mit den Schritten E23, E24, und E25 wie oben erwähnt.

Für nichtlineare Sensormodelle, oder wenn bilineare Terme geschätzt werden, werden im Folgenden zwei alternative Ansätze eingeführt. Der erste Ansatz betrifft die Verwendung eines nichtlinearen System-Eingangsschätzer-Algorithmus E34. Dazu sollten die Sensormodelle in einer Zustandsraummodellstruktur E33 angeordnet werden E32, in der die Zustände geschätzte Parameter sind, wie Skalierungsfaktor und Bias, während die anderen Variablen für den linearen Fall oben bereits eingeführt wurden. Die Gleichungen der Messungen sind die Sensormodelle selbst. Es sollte jedoch beachtet werden, dass es grundsätzlich nicht möglich ist, alle Kombinationen von Bias und Skalierungsfaktoren und Ausrichtungsfehler für die Kombinationen von zueinander redundanten Sensoren zu berechnen, da der Nullraum der Matrix mit den Messgrößen nicht beobachtbar ist. Wird ein Kalman-Filter verwendet, kann die Kovarianzmatrix schlecht konditioniert sein wegen der nicht-Beobachtbarkeit, und somit numerische Probleme im Filter verursachen.

Der zweite Ansatz ist es, eine Schätzung der Eingangsgrößen zu verwenden, sodass das System voll beobachtbar ist, indem der Nullraum der Matrix der Messungen verwendet wird. Dies bezieht sich einerseits auf die Schätzung der Eingangsgrößen linearer Systeme, siehe später Felder E31 und E38. Im Falle von nichtlinearen Sensormodellen einer Schätzung von bilinearen Termen ist es außerdem notwendig, das System so zu modifizieren, dass es mit einem linearen Schätzalgorithmus verwendet werden kann. Dafür ist das Modell zunächst zu linearisieren E35 in Bezug auf die Zustände des Systems und auf die Eingangsgrößen. Für jede Iteration in der online Schätzung wird für den Linearisierungspunkt sowohl die a priori Schätzung der Zustände und der Moving Average der a priori Schätzung der Systemeingänge angenommen. Der Moving Average wird hierbei eingeführt, da sich die Eingangsgrößen abrupt ändern können, beispielsweise bei der Schätzung von Beschleunigungen unter Vibrationen. Das Modell muss dann umgebaut werden E36, um eine Quasi-Lineare Parameter-Variante (LPV) Struktur zu erhalten, mit der Wirkung, dass die Terme danach unterteilt werden, ob sie abhängig von den gegenwärtigen Zuständen und Eingangsgrößen sind oder ob sie eine a priori Schätzung davon bilden. Die a priori Terme werden dann als Koeffizienten eines zeitveränderlichen linearen Matrixsystems verwendet, während die aktuellen Terme die Zustände und die Vektoren der Eingangsgrößen des Zustandsraummodells bilden, sodass das Zustandsraummodell E37 vollständig gebildet wird. Daher betrifft der Block E37 ein quasi-LPV Zustandsraummodell bezüglich eines Referenzkoordinatensystems. Die Terme, die nur von den a priori Termen abhängig sind, werden weitergegeben um mit den bekannten Messwerten kompensiert zu werden. Das Modell E37 kann dann mit dem Algorithmus E38 benutzt werden, während das Modell E30 mit dem Algorithmus E31 benutzt werden kann.

Es ist eine Frage der Situation, welches Modell und welcher Algorithmus bevorzugt verwendet wird, wobei die Entscheidung einer Abwägung zwischen Genauigkeit, Rechenaufwand und der Schätzung von Parametern entspricht. Im folgenden wird beispielhaft die Charakterisierung von Beschleunigungssensoren gegenüber Rotationsbewegungen und die Charakterisierung von Kreiselinstrumenten gegenüber Beschleunigungen erläutert, wobei weiterhin die Fig. 2 und Fig. 3 zum Verständnis heranzuziehen sind.

Zur Koordinatensystem-Transformation für ein jeweiliges Modell:

Es sei $F_R$ = {$\mathbf{n}_x$, $\mathbf{n}_y$, $\mathbf{n}_z$} das Referenzkoordinatensystem der inertialen Messeinheit, auf welches bezogen die inertialen Messungen geschätzt werden sollen. Ferner sei $F_S$ = {$\mathbf{n}_i$, $\mathbf{n}_p$, $\mathbf{n}_o$} das Referenzkoordinatensystem für einen Sensor, wobei die Achse $\mathbf{n}_i$ die Sensor-Hauptachse ist. Die Transformation von $F_R$ nach $F_S$ kann durch folgende Koordinatensystem-Transformations- Matrix, auch genannt "Richtungs-Kosinus-Matrix" (abgekürzt DCM für "Direction Cosine Matrix") angegeben werden:

$$\begin{bmatrix} \mathbf{n}_i \\ \mathbf{n}_p \\ \mathbf{n}_o \end{bmatrix} = \mathbf{W} \begin{bmatrix} \mathbf{n}_x \\ \mathbf{n}_y \\ \mathbf{n}_z \end{bmatrix} = \begin{bmatrix} \alpha_{ix} & \alpha_{iy} & \alpha_{iz} \\ \alpha_{px} & \alpha_{py} & \alpha_{pz} \\ \alpha_{ox} & \alpha_{oy} & \alpha_{oz} \end{bmatrix} \begin{bmatrix} \mathbf{n}_x \\ \mathbf{n}_y \\ \mathbf{n}_z \end{bmatrix}$$

Die inertiale Messgröße, wie sie vom jeweiligen Sensor gemessen wird, kann ferner erhalten werden durch:

$$s^i(k) = \alpha_{ix} s_1^x(k) + \alpha_{iy} s_1^y(k) + \alpha_{iz} s_1^z(k)$$
$$s^p(k) = \alpha_{px} s_1^x(k) + \alpha_{py} s_1^y(k) + \alpha_{pz} s_1^z(k)$$
$$s^o(k) = \alpha_{ox} s_1^x(k) + \alpha_{oy} s_1^y(k) + \alpha_{oz} s_1^z(k)$$

worin $\mathbf{s}_1^R = \left[ s_1^x, s_1^y, s_1^z \right]$ die inertialen Messgrößen des ersten Ansatzes bezüglich des Systems $F_R$ sind. Es sei ferner das folgende lineare dynamische Modell betrachtet, welches Kompensationen für die Sensor Hauptachse bezüglich Skalierung und Bias aufweist:

$$\begin{aligned} E_j^S(k) = & s_1^i(k) + \ldots + b'_{jm} s_1^i(k-m) + \\ & + \mathbf{c}'_{j0} \mathbf{s}_2^S(k) + \ldots + \mathbf{c}'_{jm} \mathbf{s}_2^S(k-m) + \\ & + a_{j1} E(k-1) + \ldots + a_{jm} E(k-m) \\ & + d_{j1} v(k-1) + \ldots + d_{jm} v(k-m) + v(k) \end{aligned}$$

Hierin sind m die Modellordnung, $b'_{j0}, \ldots, b'_{j0}$, und $\mathbf{c}'_{j0}, \ldots, \mathbf{c}'_{jm}$ und $a_{j1}$, ..., $a_{jm}$ und $\boldsymbol{d}_{j1}$, ..., $\boldsymbol{d}_{jm}$ sind die realen Koeffizienten, ferner gilt $\mathbf{c}_{j0}$ = [$\boldsymbol{c}_{1|j0}$, $\boldsymbol{c}_{2|j0}$, $\boldsymbol{c}_{3|j0}$] und $E_j^S(k)$ ist die gemessene Sensorantwort zur Instanz $k$ des Sensors $j$, abhängig von der ersten physikalischen Haupt-Messgröße des ersten Ansatzes. Ferner sind $\mathbf{s}_2^S$ die physikalischen Haupt-Mess-Größen des zweiten Ansatz, für den die Sensorsensitivität ebenfalls charakterisiert wurde; ferner ist $v(k)$ ein zufällig-weißes Messerauschen von bekannter Varianz; obiges Modell kann daher umgeschrieben werden in Bezug auf das System $F_R$:

$$\begin{aligned} E_j^R(k) = & \mathbf{b}_{j0} \mathbf{s}_1^R(k) + \ldots + \mathbf{b}_{jm} \mathbf{s}_1^R(k-m) + \\ & + \mathbf{c}_{j0} \mathbf{s}_2^R(k) + \ldots + \mathbf{c}_{jm} \mathbf{s}_2^R(k-m) + \\ & + a_{j1} E(k-1) + \ldots + a_{jm} E(k-m) \\ & + d_{j1} v(k-1) + \ldots + d_{jm} v(k-m) + v(k) \end{aligned} \qquad \text{(M)}$$

wobei gilt: $\mathbf{b}_{jl} = [b'_{jl}, 0, 0] \mathbf{W}_j$, und $\mathbf{c}_{jl} = \mathbf{c}'_{jl} \mathbf{W}_j$, für $l$ = 0, ..., m, wobei $\mathbf{W}_j$ die DCM Matrix für Sensor $j$ ist.

Zum nichtlinearen Fall:

A1) Zu den Beschleunigungssensoren: Es sei $\mathbf{u}(k) \in \mathbb{R}^{12}$ der Vektor der Eingangsgröße zur Instanz $k \in \mathbb{Z}$ von nichtlinearen Kombinationen von Beschleunigungen im Bezug auf $F_S$ = {$\mathbf{n}_i$, $\mathbf{n}_p$, $\mathbf{n}_o$}, sodass gilt:

$$\mathbf{u}^S(k) = \begin{bmatrix} a_i(k) & a_p(k) & a_o(k) & a_i{}^2(k) & a_p{}^2(k) & a_o{}^2(k) & a_i(k)a_p(k) & a_i(k)a_o(k) \\ a_p(k)a_o(k) & \operatorname{sign}(a_i(k)) & |a_i(k)| & a_i(k)|a_i(k)| \end{bmatrix}^T$$

Hierbei sind $a_i$, $a_p$ und $a_o$ die Beschleunigungen entlang $\mathbf{n}_i$ bzw. $\mathbf{n}_p$ bzw. $\mathbf{n}_o$. Eine Messung des jeweiligen Beschleunigungssensors j kann modelliert werden als:

$$E_j^S(k) = K_{b|j} + \mathbf{b}_{j0}^T \mathbf{u}^S(k) + \ldots + \mathbf{b}_{jm}^T \mathbf{u}^S(k-m) +$$
$$+ a_{j1}E(k-1) + \ldots + a_{jm}E(k-m)$$
$$+ c_{j1}v(k-1) + \ldots + c_{jm}v(k-m) + v(k)$$

Hierin sind m die Modellordnung, $\mathbf{b}_{j0}^T, \ldots, \mathbf{b}_{jm}^T$ und $a_{j1}, \ldots, a_{jm}$ und $c_{j1}, \ldots, c_{jm}$ reale Koeffizienten, wobei gilt $\mathbf{b}_{jl}^T = [b_{jl,0}, \ldots, b_{jl,11}]$. Obiger Vektor der Eingangsgrößen $\mathbf{u}^S(k)$ kann jede Kombination von Referenzbeschleunigungen aufweisen, und kann auch weitere Variablen wie Rotationsraten (Drehraten) umfassen. Das selbe Modell im Bezug auf $F_R$ kann erhalten werden durch:

$$E_j^R(k) = K_{b|j} + \mathcal{B}_{j0}^{\mathbf{a}^R} \mathbf{a}^R(k) + \ldots + \mathcal{B}_{jm}^{\mathbf{a}^R} \mathbf{a}^R(k-m) +$$
$$+ a_{j1}E_j(k-1) + \ldots + a_{jm}E_j(k-m) \qquad (A)$$
$$+ c_{j1}v_j(k-1) + \ldots + c_{jm}v_j(k-m) + v_j(k)$$

Hierbei sind $\mathbf{a}^R = [a_x, a_y, a_z]$ die Beschleunigungen in $F_R$ und es gilt:

$$\mathcal{B}_{jl}^{\mathbf{a}^R} = \begin{bmatrix} 1 & (\mathbf{a}^R)^T(k-l)\mathbf{W}_j^T & 1 & 1 & 1 \end{bmatrix} \begin{bmatrix} b_{jl,0} & b_{jl,1} & b_{jl,2} \\ b_{jl,3} & b_{jl,6} & 0 \\ 0 & b_{jl,4} & b_{jl,8} \\ b_{jl,7} & 0 & b_{jl,5} \\ \dfrac{b_{jl,9}}{\sqrt{\left(\begin{bmatrix}1 & 0 & 0\end{bmatrix}\mathbf{W}_j\mathbf{a}^R(k-l)\right)^2 + \varepsilon^2}} & 0 & 0 \\ b_{jl,10}\left(\begin{bmatrix}1 & 0 & 0\end{bmatrix}\mathbf{W}_j\mathbf{a}^R(k-l)\right) & 0 & 0 \\ b_{jl,11}\left|\begin{bmatrix}1 & 0 & 0\end{bmatrix}\mathbf{W}_j\mathbf{a}^R(k-l)\right| & 0 & 0 \end{bmatrix} \mathbf{W}_j$$

für $l = 0, \ldots, m$ und sehr kleine $\varepsilon$ um Division durch Null zu vermeiden.

A2) Zu den Kreiselinstrumenten: Gegeben sei folgendes beispielhaftes Modell:

$$\Omega_j^S(k)S_{0|j}\left[1 + 10^{-6}\varepsilon_{Tj}T_j(k) + c_{f1|j}\omega_j^i(k) + c_{f2|j}(\omega_j^i)^2(k) + c_{f3|j}|\omega_j^i|(k)\right] =$$
$$= c_{I1|j}\omega_j^i(k) + c_{I2|j}\omega_j^p(k) + c_{I3|j}\omega_j^o(k) + c_{T1|j}T_j(k) + c_{T2|j}T_j(k-1) +$$
$$+ \frac{B_j(q)}{A_j(q)}n'_{\Omega|j}(k) + \frac{D_j(q)}{C_j(q)}a_j^i(k) + \frac{F_j(q)}{E_j(q)}a_j^p(k) + \frac{H_j(q)}{G_j(q)}a_j^o(k) + D_{F|j} + \nu_j(k)$$

Hierin sind $\Omega_j^S(k)$ der Sensorausgang des Sensors $j$ zur Instanz $k$, $T_j$ die Sensortemperatur, $\boldsymbol{\omega}^S = [\omega_j^i, \omega_j^p, \omega_j^o]$ die Drehraten bezüglich $F_S$, $n'_{\Omega|j}$ das Sensorrauschen, $D_{F|j}$ der Bias, $\mathbf{a}_j^S = [a_j^i, a_j^p, a_j^o]$ Beschleunigungen bezüglich $F_S$, $A_j(q)$ bis $G_j(q)$ sind Polynome von $q$, wobei $q$ den Vorwärts-Operator im Zeitbereich angibt, $v_j(k)$ ist buntes Rauschen, und die anderen Terme sind reale Koeffizienten. Falls als notwendig erachtet, kann das Rauschen $v_j(k)$ als Prozessrauschen wie $n'_{\Omega|j}(k)$ modelliert werden, oder wenn größere Fehler zugelassen werden, kann es durch weißes zufälliges Rauschen mit adäquater Varianz angenähert werden. Weitere Strukturen des Modells sind prinzipiell möglich.

Um obiges beispielhafte Modell bezüglich $F_R$ zu notieren, ist zuerst der erste Teil dieser Modellgleichung zu beachten, der sich auf Beschleunigungen bezieht. Daraus kann erhalten werden:

$$\frac{D_j(q)}{C_j(q)}a_j^i(k) + \frac{F_j(q)}{E_j(q)}a_j^p(k) + \frac{H_j(q)}{G_j(q)}a_j^o(k)$$

$$= \left(\frac{D_j(q)}{C_j(q)}[1,0,0] + \frac{F_j(q)}{E_j(q)}[0,1,0] + \frac{H_j(q)}{G_j(q)}[0,0,1]\right)W_j\mathbf{a}^R(k)$$

$$= \frac{D'_j(q)}{C'_j(q)}a_x(k) + \frac{F'_j(q)}{E'_j(q)}a_y(k) + \frac{H'_j(q)}{G'_j(q)}a_z(k)$$

Eine Reduktion des Modells ist angemessen, um die Ordnung der Brüche gleich zu halten (bezüglich vor der Umwandlung). Ferner kann hiermit im Bezug auf $F_R$ erhalten werden:

$$\Omega_j^R(k)S_{0|j} = \mathbf{A}_j\boldsymbol{\omega}^R(k) + (c_{T1|j} - \Omega_j^S(k)S_{0|j}10^{-6}\varepsilon_{Tj})T_j(k) + c_{T2|j}T_j(k-1) +$$

$$+ \frac{B_j(q)}{A_j(q)}n'_{\Omega|j}(k) + \frac{D'_j(q)}{C'_j(q)}a_x(k) + \frac{F'_j(q)}{E'_j(q)}a_y(k) + \frac{H'_j(q)}{G'_j(q)}a_z(k) + D_{F|j} + \nu_j(k)$$

(B)

wobei gilt:

$$\mathbf{A}_j = \begin{bmatrix} 1 & -(\omega^R(k))^T\mathbf{W}_j^T & 1 \end{bmatrix}\begin{bmatrix} c_{I1|j} - \Omega_j^R(k)S_{0|j}c_{f1|j} & c_{I2|j} & c_{I3|j} \\ \Omega_j^R(k)S_{0|j}c_{f2|j} & 0 & 0 \\ 0 & 0 & 0 \\ 0 & 0 & 0 \\ -\Omega(k)_j^R S_{0|j}c_{f3|j}\left(\begin{bmatrix} 1 & 0 & 0 \end{bmatrix}\mathbf{W}_j\omega^R(k)\right) & 0 & 0 \end{bmatrix}\mathbf{W}_j.$$

Zur Modelllinearisierung E35:

BI) Zu den Beschleunigungssensoren: Gleichung (A) kann in Terme aufgetrennt werden nach:

$$E_{j|l}^R(k|\mathbf{a}^R(k)) = \mathcal{B}_{jl}^{\mathbf{a}^R}\mathbf{a}^R(k) \qquad (C)$$

$$\text{für } l = 0,...,m$$

Es sei $\mathbf{a}_0^R$ ein Punkt für die Linearisierung der Gleichung (C). Die linearisierte Gleichung (C) kann erhalten werden durch:

$$\xi_{j|l}^R(k|\mathbf{a}_0^R) = E_{j|l}^R(k|\mathbf{a}_0^R) + J_{E_{j|l}}^{\mathbf{a}_0^R}\mathbf{W}_j\left[\mathbf{a}^R - \mathbf{a}_0^R\right] \qquad (D)$$

Wobei $E_{j|l}^R(k|\mathbf{a}_0^R)$ Gleichung (C) entspricht, angewendet auf $\mathbf{a}_0^R$ und wobei:

$$J_{E_{j|l}}^{\mathbf{a}_0^R} =$$

$$\left[\begin{array}{c} b_{jl,0} + b_{jl,10}\left(\begin{bmatrix}1 & 0 & 0\end{bmatrix}\mathbf{W}_j\mathbf{a}_0^R\right) + b_{jl,11}\left|\begin{bmatrix}1 & 0 & 0\end{bmatrix}\mathbf{W}_j\mathbf{a}_0^R\right| \\ b_{jl,1} \\ b_{jl,2} \end{array}\right] +$$

$$+ \begin{bmatrix} 2b_{jl,3} & b_{jl,6} & b_{jl,7} \\ b_{jl,6} & 2b_{jl,4} & b_{jl,8} \\ b_{jl,7} & b_{jl,8} & 2b_{jl,5} \end{bmatrix} \mathbf{W}_j\mathbf{a}_0^R$$

die Jacobi Matrix von Gleichung (C) ist.

BII) Zu den Kreiselinstrumenten:

Es sei $\Omega_{j+}^R(k)$ der nichtlineare Teil der Gleichung (B), sodass gilt:

$$\Omega_{j+}^R(k|\boldsymbol{\omega}^R) = -(\boldsymbol{\omega}^R(k))^T\mathbf{W}_j^T \begin{bmatrix} \Omega_j^R(k)S_{0|j}c_{f2|j} & 0 & 0 \\ 0 & 0 & 0 \\ 0 & 0 & 0 \end{bmatrix} \mathbf{W}_j\boldsymbol{\omega}^R(k) -$$

$$- \Omega_j^R(k)S_{0|j}c_{f3|j}\left(\begin{bmatrix}1 & 0 & 0\end{bmatrix}\mathbf{W}_j\boldsymbol{\omega}^R(k)\right)\begin{bmatrix}1 & 0 & 0\end{bmatrix}\mathbf{W}_j\boldsymbol{\omega}^R(k).$$

Es sei ferner $\boldsymbol{\omega}_0^R$ ein Punkt für die Linearisierung der unmittelbar obenstehenden Gleichung, welche in ihrer linearisierten Version ist:

$$\Omega_{j+}^{R*}(k) = \Omega_{j+}^R(k|\boldsymbol{\omega}_0^R) + J_{\Omega_j^R}^{\boldsymbol{\omega}_0^R}\mathbf{W}_j[\boldsymbol{\omega}^R - \boldsymbol{\omega}_0^R]$$

wobei gilt:

$$J_{\Omega_j^R}^{\boldsymbol{\omega}_0^R} = -\frac{1}{1 + 10^{-6}\varepsilon_T T(k)} \begin{bmatrix} \frac{\partial\Omega_{j+}^R}{\partial\omega_i} & \frac{\partial\Omega_{j+}^R}{\partial\omega_p} & \frac{\partial\Omega_{j+}^R}{\partial\omega_o} \end{bmatrix}$$

$$\frac{\partial\Omega_{j+}^R}{\partial\omega_i} = \begin{bmatrix} 0 & c_{I2|j}c_{f3|j}\left(\begin{bmatrix}1 & 0 & 0\end{bmatrix}\mathbf{W}_j\boldsymbol{\omega}_0^R\right) & c_{I3|j}c_{f3|j}\left(\begin{bmatrix}1 & 0 & 0\end{bmatrix}\mathbf{W}_j\boldsymbol{\omega}_0^R\right) \end{bmatrix}\mathbf{W}_j\boldsymbol{\omega}_0^R +$$

$$+ \boldsymbol{\omega}_b^{0T}\mathbf{W}^T \begin{bmatrix} 3c_{I1|j}c_{f2|j} & 0 & 0 \\ 2c_{I2|j}c_{f2|j} & 0 & 0 \\ 2c_{I3|j}c_{f2|j} & 0 & 0 \end{bmatrix} \mathbf{W}_j\boldsymbol{\omega}_0^R + 2c_{I1|j}c_{f3|j}\left|\begin{bmatrix}1 & 0 & 0\end{bmatrix}\mathbf{W}_j\boldsymbol{\omega}_0^R\right|$$

$$\frac{\partial\Omega_{j+}^R}{\partial\omega_p} = \begin{bmatrix} 0 & c_{I2|j}c_{f2|j}\left(\begin{bmatrix}1 & 0 & 0\end{bmatrix}\mathbf{W}_j\boldsymbol{\omega}_0^R\right)^2 & 2c_{I2|j}c_{f3|j}\left|\begin{bmatrix}1 & 0 & 0\end{bmatrix}\mathbf{W}_j\boldsymbol{\omega}_0^R\right| \end{bmatrix}$$

$$\frac{\partial\Omega_{j+}^R}{\partial\omega_o} = \begin{bmatrix} 0 & c_{I3|j}c_{f2|j}\left(\begin{bmatrix}1 & 0 & 0\end{bmatrix}\mathbf{W}_j\boldsymbol{\omega}_0^R\right)^2 & 2c_{I3|j}c_{f3|j}\left|\begin{bmatrix}1 & 0 & 0\end{bmatrix}\mathbf{W}_j\boldsymbol{\omega}_0^R\right| \end{bmatrix}$$

wobei $\Omega_j^S(k)$ zur Berechnung der partiellen Ableitungen angenähert wurde durch:

$$\Omega(k) \approx \frac{c_{I1|j}\omega_i(k) + c_{I2|j}\omega_p(k) + c_{I3|j}\omega_o(k)}{S_{0|j}(1 + 10^{-6}\varepsilon_{Tj}T_j(k))}.$$

Zur Struktur des linearen Zustandsraummodells E29, E30: Es sei die folgende dynamische Repräsentation gegeben:

$$\mathbf{x}_{k+1} = \mathbf{A}_k \mathbf{x}_k + \mathbf{N}_k \mathbf{u}_k + \mathbf{B}_k \mathbf{w}_k$$

$$\mathbf{y}_k = \mathbf{C}_k \mathbf{x}_k + \mathbf{M}_k \mathbf{u}_k + \mathbf{v}_k$$

$$E\left\{ \begin{bmatrix} \mathbf{x}_0 \\ \mathbf{w}_k \\ \mathbf{v}_k \\ \mathbf{I} \end{bmatrix} \begin{bmatrix} \mathbf{x}_0 \\ \mathbf{w}_k \\ \mathbf{v}_k \end{bmatrix}^T \right\} = \begin{bmatrix} \mathbf{P}_0 & \mathbf{0} & \mathbf{0} \\ \mathbf{0} & \mathbf{Q}_k & \mathbf{0} \\ \mathbf{0} & \mathbf{0} & \mathbf{R}_k \\ \mathbf{0} & \mathbf{0} & \mathbf{0} \end{bmatrix}$$

Hierin ist $\mathbf{x}_k$ der Zustandsvektor des Systems mit der initialen Kovarianz $\mathbf{P}_0$, ferner ist $\mathbf{u}_k$ der deterministische unbekannte Vektor der Eingangsgrößen, $\mathbf{y}_k$ die Systembeobachtung oder der Systemausgang, ferner sind $\mathbf{w}_k$ und $\mathbf{v}_k$ das weiße Systemstörungs- und Beobachtungs-Rauschen mit den Kovarianz-Matrizen $\mathbf{Q}_k$ und $\mathbf{R}_k$, $\mathbf{M}_k$ ist eine Konfigurations-matrix mit vollem Spaltenrang mit Rang $r$, und $\mathbf{A}_k$, $\mathbf{B}_k$, $\mathbf{N}_k$ und $\mathbf{C}_k$ sind Matrizen mit passenden Dimensionen.

Das Modell der Gleichung (M) kann direkt in Form eines Zustandsraummodells notiert werden durch eine gewöhnliche Transformation von einer Differenzgleichung zur Zustandsraumrepräsentation. Für jeden Sensor wird bevorzugt ein zusätzlicher Zustand zur Schätzung eines additiven Fehlers für das Ausgangssignal berücksichtigt. Um die Ordnung des Modells zu reduzieren, wird bevorzugt Gleichung (M) in Form von Übertragungsfunktionen mit Bezug zu den Systemeingängen und dem Prozess-Fehler umgeschrieben. Diese Übertragungsfunktionen können dann durch Standardmodell-Reduzierung-Techniken reduziert werden und somit das System auf eine Standardzustandsraummodell-Darstellung transformiert werden.

Zur Quasi-Linearen Parameter-Varianten (LPV) Struktur E36:

CI) Zu den Beschleunigungssensoren: Nach Linearisierung des Modells nach Anteilen in Gleichung (D) wäre der klassische Ansatz, einen fixen Linearisierungspunkt für die Beschleunigungen in $F_R$ zu wählen und diese Konstante an den Sensorausgängen zu kompensieren, während das übrige Modell für die Schätzung verwendet wird. Im Gegensatz hierzu wird hierin vorgeschlagen, nur denjenigen Teil des Modells zu linearisieren, der von aktuellen Eingangsgrößen und Zuständen $E_{j|0}^R(k|\mathbf{a}^R(k))$ abhängig ist, und alle übrigen Teile $E_{j|1}^R(k|\mathbf{a}^R(k)), ..., E_{j|m}^R(k|\mathbf{a}^R(k))$ nichtlinear zu belassen: Nämlich eine zeitvariante Matrix abhängig von den Eingangsgrößen und Zuständen, multipliziert mit den Eingangsgrößen selbst. Der Linearisierungspunkt für $E_{j|0}^R$ wird bevorzugt nicht als konstanter Punkt verwendet, sondern dafür vielmehr $\mathbf{a}^R$, der Moving Average von $\mathbf{a}^R(k)$, für ein vorgegebenes Fenster.

Hieraus ergibt sich ein System mit linearer Matrixstruktur, wobei jedoch die Matrizen zeitvariant sind, basierend auf Parametern des Systems selbst. Ein solches System kann klassifiziert werden als System mit einer Quasi-Linearen Parameter-Varianten (quasi-LPV) Struktur. Stabilität für solche Systeme kann entsprechend bewiesen werden.

Ist es gewünscht, Skalierungsfaktor und Bias zu schätzen, sollten additive und multiplikative Variablen der Gleichung (A) hinzugefügt werden und das System linearisiert werden, unter anderem auch gegenüber diesen beiden Variablen. Es wird erwartet, dass die Werte dieser Variablen über die Zeit nicht allzu sehr schwanken, somit kann als Linearisierungspunkt der jüngste geschätzte Wert verwendet werden, ohne die Notwendigkeit eines Moving Average zu verwenden. Diese Variablen werden bevorzugt als zusätzliche Zustände im System berücksichtigt. Mit dem vorhergehend Gesagten, insbesondere der Berücksichtigung von lediglich additiven Fehlern (Bias) neben dem Prozessfehler, und $N_a$ Beschleunigungssensoren, kann die quasi-LPV Repräsentation für die Beschleunigungssensoren erhalten werden durch:

$$\mathbf{A}_k^a \leftarrow \begin{bmatrix} \mathbf{A}_{k|1}^a & 0 & \cdots & 0 \\ 0 & \mathbf{A}_{k|2}^a & \cdots & 0 \\ \vdots & \vdots & \ddots & \vdots \\ 0 & 0 & \cdots & \mathbf{A}_{k|N_a}^a \end{bmatrix}$$

$$\mathbf{N}_k^a \leftarrow \begin{bmatrix} \mathbf{N}_{k|1}^a \\ \mathbf{N}_{k|2}^a \\ \vdots \\ \mathbf{N}_{k|N_a}^a \end{bmatrix}$$

$$\mathbf{u}_k^a \leftarrow \mathbf{a}^R(k)$$

$$\mathbf{B}_k^a \leftarrow \begin{bmatrix} \mathbf{B}_{k|1}^a & 0 & \dots & 0 \\ 0 & \mathbf{B}_{k|2}^a & \dots & 0 \\ \vdots & \vdots & \ddots & \vdots \\ 0 & 0 & \dots & \mathbf{B}_{k|N_a}^a \end{bmatrix}$$

$$\mathbf{w}_k^a \leftarrow \begin{bmatrix} v_1(k) \\ v_2(k) \\ \vdots \\ v_{N_a}(k) \end{bmatrix}$$

$$\mathbf{y}_k^a \leftarrow \begin{bmatrix} E_1(k) - \frac{C_1}{A_1(q)} - K_{b|1} \\ E_2(k) - \frac{C_2}{A_2(q)} - K_{b|2} \\ \vdots \\ E_{N_a}(k) - \frac{C_{N_a}}{A_{N_a}(q)} - K_{b|N_a} \end{bmatrix}$$

$$\mathbf{C}_k^a \leftarrow \begin{bmatrix} \mathbf{C}_{k|1}^a & 0 & \dots & 0 \\ 0 & \mathbf{C}_{k|2}^a & \dots & 0 \\ \vdots & \vdots & \ddots & \vdots \\ 0 & 0 & \dots & \mathbf{C}_{k|N_a}^a \end{bmatrix}$$

$$\mathbf{M}_k^a \leftarrow \begin{bmatrix} J_{E_{1|0}}^{\overline{\mathbf{a}^R}} \mathbf{W}_1^a \\ J_{E_{2|0}}^{\overline{\mathbf{a}^R}} \mathbf{W}_2^a \\ \vdots \\ J_{E_{N_a|0}}^{\overline{\mathbf{a}^R}} \mathbf{W}_{N_a}^a \end{bmatrix}$$

wobei $N_a$ die Zahl der Beschleunigungssensoren im System ist und ferner gilt:

$$C_j \leftarrow \left( \mathcal{B}_{j0}^{\overline{\mathbf{a}^R}} + J_{E_{j|0}}^{\overline{\mathbf{a}^R}} \mathbf{W}_j^a \right) \overline{\mathbf{a}^R}$$

$$A_j \leftarrow 1 + a_{j1}q^{-1} + \dots + a_{jm}q^{-m}$$

$$\mathbf{A}^a_{k|j} \leftarrow \begin{bmatrix} a_{j1}\mathbf{I_{3x3}} & \dots & a_{j(m-1)}\mathbf{I_{3x3}} & a_{jm}\mathbf{I_{3x3}} & 0 \\ \mathbf{I_{3x3}} & \dots & 0 & 0 & 0 \\ \vdots & \ddots & \vdots & \vdots & \vdots \\ 0 & \dots & \mathbf{I_{3x3}} & 0 & 0 \\ a_{j1} & \dots & a_{j(m-1)} & a_{jm} & 0 \\ 1 & \dots & 0 & 0 & 0 \\ \vdots & \ddots & \vdots & \vdots & \vdots \\ 0 & \dots & 1 & 0 & 0 \\ 0 & \dots & 0 & 0 & S^a_{b,j} \end{bmatrix}$$

$$\mathbf{N}^a_{k|j} \leftarrow \begin{bmatrix} \mathbf{I_{3x3}} & 0 & \dots & 0 & 0 & 0 & \dots & 0 & 0 \end{bmatrix}^T$$

$$\mathbf{B}^a_{k|j} \leftarrow \begin{bmatrix} 0 & 0 & \dots & 0 & 1 & 0 & \dots & 0 & 0 \end{bmatrix}^T$$

$$\mathbf{C}^a_{k|j} \leftarrow \begin{bmatrix} J^{\overline{\mathbf{a}^R}}_{E_{j|0}} \mathbf{W}^a_j a_{j1} + \mathcal{B}^{\mathbf{a}^R}_{j1} & \dots & J^{\overline{\mathbf{a}^R}}_{E_{j|0}} \mathbf{W}^a_j a_{jm} + \mathcal{B}^{\mathbf{a}^R}_{jm} & a_{j1} + c_{j1} & \dots & a_{jm} + c_{jm} & 1 \end{bmatrix}$$

für j = 1, ..., $N_a$. Ferner ist $S^a_{b,j}$ die Bias-Stabilität für den Beschleunigungssensor j, wenn notwendig. Abhängig von der Wahl des Moving Average Filters für $\mathbf{a}^R(k)$ und vom Systemtyp, kann $A_j$ vereinfacht werden auf eine Konstante anstatt eines Filters. Bevor das System in die Zustandsraumdarstellung überführt wird, wird bevorzugt das System im Format von Übertragungsfunktionen umgeschrieben für jede Eingangsgröße. Weiterhin bevorzugt wird die Modellordnung für jede Übertragungsfunktion auf die kleinstnotwendige reduziert, um Systeme mit unnötiger großer Ordnung zu vermeiden.

CII) Zu den Kreiselinstrumenten: Mit demselben Gedankengang zu den Hintergründen wie für die Beschleunigungssensoren wird bevorzugt das System für die Kreiselinstrumente über den Moving Average der letzten bekannten Eingangsgrößen $\overline{\omega^R}$ linearisiert, um wiederum ein quasi-LPV System zu schaffen. Dasselbe gilt für die Temperaturmessungen und die Sensorausgangsgrößen: Da diese alle gemessene Größen sind, werden sie als Scheduling Parameter betrachtet. Es sei:

$$\bar{\Omega}^R_j(k) = \Omega^R_j(k)S_{0|j}\left[1 + 10^{-6}\varepsilon_{Tj}T_j(k)\right] - c_{T1|j}T_j(k) - c_{T2|j}T_j(k-1) - \Omega^R_{j+}(k|\overline{\omega^R})+$$
$$+ J^{\overline{\omega^R}}_{\Omega^R_j}\mathbf{W}_j\overline{\omega^R} - D_{F|j}$$

Und:

$$\mathbf{A}^g_j(k) = \left(\begin{bmatrix} c_{I1|j} - \Omega^R_j(k)S_{0|j}c_{f1|j} & c_{I2|j} & c_{I3|j} \end{bmatrix} + J^{\overline{\omega^R}}_{\Omega^R_j}\right)$$

So dass gilt mit der folgenden Gleichung (E):

$$\bar{\Omega}^R_j(k) = \mathbf{A}^g_j(k)\mathbf{W}^g_j\omega^R(k) + \frac{B_j(q)}{A_j(q)}n'_{\Omega|j}(k) + \frac{D'_j(q)}{C'_j(q)}a_x(k)+$$
$$+ \frac{F'_j(q)}{E'_j(q)}a_y(k) + \frac{H'_j(q)}{G'_j(q)}a_z(k) + \nu(k) \tag{E}$$

Mit der oben eingeführt dynamische Repräsentation des linearen Zustandsraummodells E29, E30, den obigen Herleitungen, der Schätzung, als Beispiel, von nur ausgangsadditiven Fehlern (Bias) neben Prozessfehlern, und $N_g$ Kreiselinstrumenten, kann die quasi-LPV Repräsentation der Kreiselinstrumente erhalten werden durch:

$$\mathbf{A}_k^g \leftarrow \begin{bmatrix} \mathbf{A}_{k|1}^g & 0 & \cdots & 0 \\ 0 & \mathbf{A}_{k|2}^g & \cdots & 0 \\ \vdots & \vdots & \ddots & \vdots \\ 0 & 0 & \cdots & \mathbf{A}_{k|N_g}^g \end{bmatrix}; \qquad \mathbf{N}_k^g \leftarrow \begin{bmatrix} \mathbf{N}_{k|1}^g \\ \mathbf{N}_{k|2}^g \\ \vdots \\ \mathbf{N}_{k|N_g}^g \end{bmatrix}$$

$$\mathbf{u}_k^g \leftarrow \begin{bmatrix} (\mathbf{a}^R(k))^T & (\boldsymbol{\omega}^R(k))^T \end{bmatrix}^T$$

$$\mathbf{B}_k^g \leftarrow \begin{bmatrix} \mathbf{B}_{k|1}^g & 0 & \cdots & 0 \\ 0 & \mathbf{B}_{k|2}^g & \cdots & 0 \\ \vdots & \vdots & \ddots & \vdots \\ 0 & 0 & \cdots & \mathbf{B}_{k|N_g}^g \end{bmatrix}$$

$$\mathbf{w}_k^g \leftarrow \begin{bmatrix} n'_{\Omega|1}(k) \\ n'_{\Omega|2}(k) \\ \vdots \\ n'_{\Omega|N_g}(k) \end{bmatrix}; \qquad \mathbf{y}_k^g \leftarrow \begin{bmatrix} \bar{\Omega}_1^R(k) \\ \bar{\Omega}_2^R(k) \\ \vdots \\ \bar{\Omega}_{N_g}^R(k) \end{bmatrix};$$

$$\mathbf{C}_k^g \leftarrow \begin{bmatrix} \mathbf{C}_{k|1}^g & 0 & \cdots & 0 \\ 0 & \mathbf{C}_{k|2}^g & \cdots & 0 \\ \vdots & \vdots & \ddots & \vdots \\ 0 & 0 & \cdots & \mathbf{C}_{k|N_g}^g \end{bmatrix}$$

$$\mathbf{M}_k^g \leftarrow \begin{bmatrix} d'_{0|1} & f'_{0|1} & h'_{0|1} & \mathbf{A}_1^g(k)\mathbf{W}_1^g \\ d'_{0|2} & f'_{0|2} & h'_{0|2} & \mathbf{A}_2^g(k)\mathbf{W}_2^g \\ \vdots & \vdots & & \\ d'_{0|N_g} & f'_{0|N_g} & h'_{0|N_g} & \mathbf{A}_{N_g}^g(k)\mathbf{W}_{N_g}^g \end{bmatrix};$$

$$\mathbf{v}_k^g \leftarrow \begin{bmatrix} b_{0|1}n'_{\Omega|1}(k) + \nu_1(k) \\ b_{0|2}n'_{\Omega|2}(k) + \nu_2(k) \\ \vdots \\ b_{0|N_g}n'_{\Omega|N_g}(k) + \nu_{N_g}(k) \end{bmatrix}$$

wobei gilt:

$$
\mathbf{A}^g_{k|j} \leftarrow
\begin{bmatrix}
a_{1|j} & \cdots & a_{m_a-1|j} & a_{m_a|j} & 0 & \cdots & 0 & 0 & 0 & \cdots \\
0 & 0 & 0 & \cdots & 0 & 0 & 0 & & & \\
1 & \cdots & 0 & 0 & 0 & \cdots & 0 & 0 & 0 & \cdots \\
0 & 0 & 0 & \cdots & 0 & 0 & 0 & & & \\
\vdots & \ddots & \vdots & \vdots & \vdots & \cdots & \vdots & \vdots & \vdots & \cdots \\
\vdots & \vdots & \vdots & \ddots & \vdots & \vdots & \vdots & & & \\
0 & \cdots & 1 & 0 & 0 & \cdots & 0 & 0 & 0 & \cdots \\
0 & 0 & 0 & \cdots & 0 & 0 & 0 & & & \\
0 & \cdots & 0 & 0 & c'_{1|j} & \cdots & c'_{m_c-1|j} & c'_{m_c|j} & 0 & \cdots \\
0 & 0 & 0 & \cdots & 0 & 0 & 0 & & & \\
0 & \cdots & 0 & 0 & 1 & \cdots & 0 & 0 & 0 & \cdots \\
0 & 0 & 0 & \cdots & 0 & 0 & 0 & & & \\
\vdots & \cdots & \vdots & \vdots & \vdots & \ddots & \vdots & \vdots & \vdots & \cdots \\
\vdots & \vdots & \vdots & \ddots & \vdots & \vdots & \vdots & & & \\
0 & \cdots & 0 & 0 & 0 & \cdots & 1 & 0 & 0 & \cdots \\
0 & 0 & 0 & \cdots & 0 & 0 & 0 & & & \\
0 & \cdots & 0 & 0 & 0 & \cdots & 0 & 0 & e'_{1|j} & \cdots \\
e'_{m_e-1|j} & e'_{m_e|j} & 0 & \cdots & 0 & 0 & 0 & & & \\
0 & \cdots & 0 & 0 & 0 & \cdots & 0 & 0 & 1 & \cdots \\
0 & 0 & 0 & \cdots & 0 & 0 & 0 & & & \\
\vdots & \cdots & \vdots & \vdots & \vdots & \cdots & \vdots & \vdots & \vdots & \ddots \\
\vdots & \vdots & \vdots & \ddots & \vdots & \vdots & \vdots & & & \\
0 & \cdots & 0 & 0 & 0 & \cdots & 0 & 0 & 0 & \cdots \\
1 & 0 & 0 & \cdots & 0 & 0 & 0 & & & \\
0 & \cdots & 0 & 0 & 0 & \cdots & 0 & 0 & 0 & \cdots \\
0 & 0 & g'_{1|j} & \cdots & g'_{m_g-1|j} & g'_{m_g|j} & 0 & & & \\
0 & \cdots & 0 & 0 & 0 & \cdots & 0 & 0 & 0 & \cdots \\
0 & 0 & 1 & \cdots & 0 & 0 & 0 & & & \\
\vdots & \cdots & \vdots & \vdots & \vdots & \cdots & \vdots & \vdots & \vdots & \ddots \\
\vdots & \vdots & \vdots & \ddots & \vdots & \vdots & \vdots & & & \\
0 & \cdots & 0 & 0 & 0 & \cdots & 0 & 0 & 0 & \cdots \\
0 & 0 & 0 & \cdots & 1 & 0 & 0 & & & \\
0 & \cdots & 0 & 0 & 0 & \cdots & 0 & 0 & 0 & \cdots \\
0 & 0 & 0 & \cdots & 0 & 0 & S^g_{b,j} & & &
\end{bmatrix}
$$

In der obigen Matrix, zugeordnet zu $\mathbf{A}^g_{k|j}$ , ist aus Platzgründen jede Zeile in die jeweils folgende fortgeschrieben, daher sind jeweilige Zeilenpaare als jeweils eine einzige Zeile zu verstehen.

$$\mathbf{N}^g_{k|j} \leftarrow \begin{bmatrix} & & & 0_{m_a \times 6} & & \\ 1 & 0 & 0 & 0 & 0 & 0 \\ & & & 0_{(m_c-1)\times 6} & & \\ 0 & 1 & 0 & 0 & 0 & 0 \\ & & & 0_{(m_e-1)\times 6} & & \\ 0 & 0 & 1 & 0 & 0 & 0 \\ & & & 0_{(m_g-1)\times 6} & & \end{bmatrix}; \qquad \mathbf{B}^g_{k|j} \leftarrow \begin{bmatrix} 1 \\ 0 \\ \vdots \\ 0 \end{bmatrix}$$

$$\begin{aligned} \mathbf{C}_k \leftarrow [&b_0 a_1 + b_1, \ldots, b_0 a_{m_a} + m_a, d'_0 c'_1 + \\ &+ d'_1, \ldots, d'_0 c'_{m_c} + d'_{m_c} + f'_0 e'_1 + f'_1, \ldots, f'_0 e'_{m_e} + f'_{m_e}, \\ &h'_0 g'_1 + h'_1, \ldots, h'_0 g'_{m_g} + h'_{m_g}, 1] \end{aligned}$$

Hierin sind $m_a$ und die $m_g$ Ordnungen des jeweiligen Polynoms aus Gleichung (E) und $S^g_{b,j}$ ist die die Stabilität des online geschätzten Bias.

Zu den integrierten Sensoren: Um die physikalischen Größen zu schätzen unter Verwendung der Sensitivität von allen Sensoren, werden bevorzugt deren Modelle in dieselbe Systemstruktur nach E29, E30 eingebettet. Auf Grundlage dessen wird ein Modell E37 für ein System bestehend aus Beschleunigungssensoren und Kreiselinstrumenten verwendet, wobei der Bias für jeden Sensor geschätzt wird:

$$\mathbf{A}_k \leftarrow \begin{bmatrix} \mathbf{A}^a_{k|1} & 0 \\ 0 & \mathbf{A}^g_{k|2} \end{bmatrix}; \qquad \mathbf{N}_k \leftarrow \begin{bmatrix} \mathbf{N}^a_k \\ \mathbf{N}^g_k \end{bmatrix}; \qquad \mathbf{u}_k \leftarrow \begin{bmatrix} (\mathbf{a}^R(k))^T & (\boldsymbol{\omega}^R(k))^T \end{bmatrix}^T$$

$$\mathbf{B}_k \leftarrow \begin{bmatrix} \mathbf{B}^a_k & 0 \\ 0 & \mathbf{B}^g_k \end{bmatrix}; \qquad \mathbf{w}_k \leftarrow \begin{bmatrix} \mathbf{w}^a_k \\ \mathbf{w}^g_k \end{bmatrix}; \qquad \mathbf{y}_k \leftarrow \begin{bmatrix} \mathbf{y}^a_k \\ \mathbf{y}^g_k \end{bmatrix}$$

$$\mathbf{C}^g_k \leftarrow \begin{bmatrix} \mathbf{C}^a_k & 0 \\ 0 & \mathbf{C}^g_k \end{bmatrix}; \qquad \mathbf{M}_k \leftarrow \begin{bmatrix} \mathbf{M}^a_k \\ \mathbf{M}^g_k \end{bmatrix}; \qquad \mathbf{v}_k \leftarrow \begin{bmatrix} \mathbf{v}^a_k \\ \mathbf{v}^g_k \end{bmatrix}$$

Zum Algorithmus E31 für die Schätzung des Systemeingangs des linearen Systems: Bevorzugt werden die Ausgangsgrößen (d. h. die Messgrößen, also die Sensorantworten) der Sensoren fusioniert, um einen Algorithmus zur Schätzung der Eingangsgröße zu verwenden, der den Nullraum der Beobachtungsmatrix $\mathbf{M}_k$ berücksichtigt. Es können jedoch auch alternative Methoden verwendet werden, die in diese Kategorie passen. Der folgende Algorithmus X ist eine mögliche Ausführung zur Erreichung dessen. Die Kovarianzmatrix wird damit online adaptiert. Wenn der aktive Algorithmus nicht notwendig ist, kann $\mathbf{Q}^*_k$ auch wie im Schritt 2 des Algorithmus X für alle Iterationen ermittelt werden; Algorithmus X, zur adaptiven Schätzung der unbekannten Eingangsgröße:

Stelle bereit: $\mathbf{A}_k, \mathbf{N}_k, \mathbf{B}_k, \mathbf{y}_k, \mathbf{C}_k, \mathbf{M}_k, \mathbf{P}_0, \mathbf{Q}_k, \mathbf{R}_k, m_v, r$

1. $\mathbf{x}_k^N = 0$

2. $\mathbf{Q}_k^* = \mathbf{B}_k\mathbf{Q}_k\mathbf{B}_k^T + \mathbf{N}_k\mathbf{M}_k^*\mathbf{R}_k\mathbf{M}_k^{*T}\mathbf{N}_k^T$

3. Beginne Schleife: Tue Folgendes, solange $\exists k$:

    → Verändere Variablen:

4. $[U, S, V] \leftarrow \mathrm{svd}(\mathbf{M}_k^T)$

5. $\mathbf{T}_k = \left(V(:, r+1:end)\right)^T$

6. $\mathbf{M}_k^* = \left(\mathbf{M}_k^T\mathbf{R}_k^{-1}\mathbf{M}_k\right)^{-1}\mathbf{M}_k^T\mathbf{R}_k^{-1}$

7. $\mathbf{A}_k^* = \mathbf{A}_k + \mathbf{N}_k\mathbf{M}_k^*\mathbf{C}_k$

8. $\mathbf{B}_k^* = \mathbf{N}_k\mathbf{M}_k^*$

9. $\mathbf{C}_k^{\#} = \mathbf{T}_k\mathbf{C}_k$

    → Lösen des deterministischen Systems

10. $\mathbf{y}_k^N = \mathbf{C}_k^{\#}\mathbf{x}_k^N$

11. $\mathbf{x}_{k+1}^N = \mathbf{A}_k^*\mathbf{x}_k^N + \mathbf{B}_k^*\mathbf{y}_k$

    → Kalman Filter des Fehlers

12. $\mathbf{R}_k^* = \mathbf{T}_k\mathbf{R}_k\mathbf{T}_k^T$

13. $\mathbf{y}_k^e = \mathbf{T}_k\mathbf{y}_k - \mathbf{y}_k^N$

14. $\tilde{\mathbf{y}}_k = \mathbf{y}_k^e - \mathbf{C}_k^{\#}\hat{\mathbf{x}}_{k|k-1}^e$

15. $\mathbf{K}_k = \mathbf{P}_{k|k-1}\mathbf{C}_k^{\#T}\left(\mathbf{C}_k^{\#}\mathbf{P}_{k|k-1}\mathbf{C}_k^{\#T} + \mathbf{R}_k^*\right)^{-1}$

16. $\mathbf{P}_{k|k} = \left(\mathbf{I} - \mathbf{K}_k\mathbf{C}_k^{\#}\right)\mathbf{P}_{k|k-1}$

17. $\hat{\mathbf{x}}_{k|k}^e = \hat{\mathbf{x}}_{k|k-1}^e + \mathbf{K}_k\tilde{\mathbf{y}}_k$

18. $\hat{\mathbf{x}}_{k+1|k}^e = \mathbf{A}_k^*\hat{\mathbf{x}}_{k|k}^e$

19. $\mathbf{P}_{k+1|k} = \mathbf{A}_k^*\mathbf{P}_{k|k}\mathbf{A}_k^{*T} + \mathbf{Q}_k^*$

    → Adaptive Fehler Kovarianz

20. $\hat{\mathbf{C}}_v = \frac{1}{m_v}\sum_{i=1}^{m_v}\tilde{\mathbf{y}}_{k-i}\tilde{\mathbf{y}}_{k-i}^T$

21. $m_y = length(\tilde{\mathbf{y}}_k)$

22. $\mathbf{Q}_k^* = \mathbf{K}_k\hat{\mathbf{C}}_v\mathbf{K}_k^T\left(\frac{1}{m_y}\right)\sum_{i=1}^{m_y}\tilde{y}_i$

    → Optimale Schätzung der Eingangsgröße

23. $\hat{\mathbf{x}}_k = \mathbf{x}_k^N + \hat{\mathbf{x}}_{k|k}^e$

24. $\hat{\mathbf{u}}_k^* = \mathbf{M}_k^*\left(\mathbf{y}_k - \mathbf{C}_k\hat{\mathbf{x}}_k\right)$

25. Beende Schleife

Zum modifizierten Algorithmus zur Schätzung der Eingangsgröße des linearen Systems E38: Der folgende Algorithmus Y dient dazu, die Ausgangsgrößen der redundanten Sensoren zu fusionieren. Wiederum umfasst der Algorithmus die Linearisierung des Systems über den Moving Average der jeweils vorhergehenden Schätzung der Eingangsgröße und über vorhergehende Zustände, wenn Skalenfaktoren, Bias und Ausrichtungsfehler geschätzt werden; Algorithmus Y:

Stelle bereit: $\mathbf{A}_k, \mathbf{N}_k, \mathbf{B}_k, \mathbf{y}_k, \mathbf{C}_k, \mathbf{M}_k, \mathbf{P}_0, \mathbf{Q}_k, \mathbf{R}_k, m_v, m_u, r$:

1. $\mathbf{x}_k^N = 0$

2. $\mathbf{Q}_k^* = \mathbf{B}_k \mathbf{Q}_k \mathbf{B}_k^T + \mathbf{N}_k \mathbf{M}_k^* \mathbf{R}_k \mathbf{M}_k^{*T} \mathbf{N}_k^T$

3. Beginne Schleife: Tue Folgendes, solange $\exists k$:

  &rarr; Verändere Variablen:

4. $[U, S, V] \leftarrow \operatorname{svd}(\mathbf{M}_k^T)$

5. $\mathbf{T}_k = \left(V(:, r+1 : end)\right)^T$

6. $\mathbf{M}_k^* = \left(\mathbf{M}_k^T \mathbf{R}_k^{-1} \mathbf{M}_k\right)^{-1} \mathbf{M}_k^T \mathbf{R}_k^{-1}$

7. $\mathbf{A}_k^* = \mathbf{A}_k + \mathbf{N}_k \mathbf{M}_k^* \mathbf{C}_k$

8. $\mathbf{B}_k^* = \mathbf{N}_k \mathbf{M}_k^*$

9. $\mathbf{C}_k^\# = \mathbf{T}_k \mathbf{C}_k$

  &rarr; Lösen des deterministischen Systems

10. $\mathbf{y}_k^N = \mathbf{C}_k^\# \mathbf{x}_k^N$

11. $\mathbf{x}_{k+1}^N = \mathbf{A}_k^* \mathbf{x}_k^N + \mathbf{B}_k^* \mathbf{y}_k$

  &rarr; Kalman Filter des Fehlers

12. $\mathbf{R}_k^* = \mathbf{T}_k \mathbf{R}_k \mathbf{T}_k^T$

13. $\mathbf{y}_k^e = \mathbf{T}_k \mathbf{y}_k - \mathbf{y}_k^N$

14. $\tilde{\mathbf{y}}_k = \mathbf{y}_k^e - \mathbf{C}_k^\# \hat{\mathbf{x}}_{k|k-1}^e$

15. $\mathbf{K}_k = \mathbf{P}_{k|k-1} \mathbf{C}_k^{\#T} \left(\mathbf{C}_k^\# \mathbf{P}_{k|k-1} \mathbf{C}_k^{\#T} + \mathbf{R}_k^*\right)^{-1}$

16. $\mathbf{P}_{k|k} = \left(\mathbf{I} - \mathbf{K}_k \mathbf{C}_k^\#\right) \mathbf{P}_{k|k-1}$

17. $\hat{\mathbf{x}}_{k|k}^e = \hat{\mathbf{x}}_{k|k-1}^e + \mathbf{K}_k \tilde{\mathbf{y}}_k$

18. $\hat{\mathbf{x}}_{k+1|k}^e = \mathbf{A}_k^* \hat{\mathbf{x}}_{k|k}^e$

19. $\mathbf{P}_{k+1|k} = \mathbf{A}_k^* \mathbf{P}_{k|k} \mathbf{A}_k^{*T} + \mathbf{Q}_k^*$

  &rarr; Adaptive Fehler Kovarianz

20. $\hat{\mathbf{C}}_v = \frac{1}{m_v} \sum_{i=1}^{m_v} \tilde{\mathbf{y}}_{k-i} \tilde{\mathbf{y}}_{k-i}^T$

21. $m_y = length(\tilde{\mathbf{y}}_k)$

22. $\mathbf{Q}_k^* = \mathbf{K}_k \hat{\mathbf{C}}_v \mathbf{K}_k^T \left(\frac{1}{m_y}\right) \sum_{i=1}^{m_y} \tilde{y}_i$

  &rarr; Optimale Schätzung der Eingangsgröße

23. $\hat{\mathbf{x}}_k = \mathbf{x}_k^N + \hat{\mathbf{x}}_{k|k}^e$

$$24.\ \hat{\mathbf{u}}_k^* = \mathbf{M}_k^* \left( \mathbf{y}_k - \mathbf{C}_k \hat{\mathbf{x}}_k \right)$$

$$\rightarrow \text{Linearisierungspunkte}$$

$$25.\ \overline{\mathbf{u}} = \frac{1}{m_u} \sum_{i=1}^{m_u} \hat{\mathbf{u}}_{k-i}$$

$$26.\ \overline{\mathbf{a}^R} = \begin{bmatrix} 1 & 0 & 0 & 0 & 0 & 0 \\ 0 & 1 & 0 & 0 & 0 & 0 \\ 0 & 0 & 1 & 0 & 0 & 0 \end{bmatrix} \overline{\mathbf{u}}$$

$$27.\ \overline{\boldsymbol{\omega}^R} = \begin{bmatrix} 0 & 0 & 0 & 1 & 0 & 0 \\ 0 & 0 & 0 & 0 & 1 & 0 \\ 0 & 0 & 0 & 0 & 0 & 1 \end{bmatrix} \overline{\mathbf{u}}$$

28. Beende Schleife

Obwohl die Erfindung im Detail durch bevorzugte Ausführungsbeispiele näher illustriert und erläutert wurde, so ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen, beispielsweise hinsichtlich der Funktion oder der Anordnung einzelner, in einer beispielhaften Ausführungsform genannter Elemente, vornehmen kann, ohne den Schutzbereich zu verlassen, der durch die Ansprüche definiert

Bezugszeichenliste

S1    Ermitteln
S2    Ermitteln
S3    Ermitteln
S4    Ermitteln
S5    Erstellen
S6    Integrieren
S7    Ermitteln

E21    Kreiselinstrument- Charakterisierung gegenüber Rotationen
E22    Beschleunigungssensor-Charakterisierung gegenüber Beschleunigungen/Vibrationen
E24    Kreiselinstrument- Charakterisierung gegenüber Vibrationen
E25    Beschleunigungssensor-Charakterisierung gegenüber Rotationen
E26    Diskretisierte Sensormodelle
E27    Modell- Koordinatensystem-Transformation
E28    Entscheidung über nichtlineares Modell und/oder bilineare Terme
E29    Modell-Umbau in lineare Zustandsraumdarstellung
E30    Lineares Zustandsraummodell mit Bezug auf ein Referenzkoordinatensystem
E31    Algorithmus zur Schätzung der Eingangsgröße des linearen Systems
E32    Modell-Umbau in nicht-lineare Zustandsraumdarstellung
E33    Nicht-lineares Zustandsraummodell mit Bezug auf ein Referenzkoordinatensystem
E34    Algorithmus zur Schätzung der Eingangsgröße des nichtlinearen Systems
E35    Modelllinearisierung
E36    Modell Umbau in eine quasi-LPV Struktur
E37    Quasi-LPV Zustandsraummodell mit Bezug auf ein Referenzkoordinatensystem
E38    Modifizierter Algorithmus zur Schätzung der Eingangsgröße des linearen Systems

IMU      Inertiale Messeinheit
D1,D2      Beschleunigungssensoren
D3,D4      Kreiselinstrumente
CD      Kalibriereinheit
CA      dreiachsige Beschleunigung
CR      dreiachsige Drehrate

**Patentansprüche**

1. Verfahren zum Kalibrieren einer Anordnung aus inertialen Sensoren mit mindestens zwei unterschiedlichen Sensortypen zum bestimmungsgemäßen Erfassen von mindestens zwei unterschiedlichen physikalischen Größen, aufweisend die Schritte:

    - Ermitteln (S1) einer Charakterisierung eines ersten inertialen Sensors eines ersten Sensortyps bezüglich seiner Haupt-Sensitivität auf die durch ihn bestimmungsgemäß zu erfassende erste physikalische Größe;
    - Ermitteln (S2) einer Charakterisierung eines zweiten inertialen Sensors eines zweiten Sensortyps bezüglich seiner Haupt-Sensitivität auf die durch ihn bestimmungsgemäß zu erfassende zweite physikalische Größe;
    - Ermitteln (S3) einer Charakterisierung des ersten inertialen Sensors bezüglich seiner Kreuz-Sensitivität auf die durch ihn nicht bestimmungsgemäß zu erfassende zweite physikalische Größe;
    - Ermitteln (S4) einer Charakterisierung des zweiten inertialen Sensors bezüglich seiner Kreuz-Sensitivität auf die durch ihn nicht bestimmungsgemäß zu erfassende erste physikalische Größe;
    wobei die jeweilige Charakterisierung ein modelliertes Übertragungsverhalten eines jeweiligen inertialen Sensors von einer jeweiligen vorherrschenden erfassbaren physikalischen Größe auf ein jeweiliges verarbeitbares Sensorsignal angibt;
    - Erstellen (S5) eines jeweiligen Sensormodells auf Basis der jeweiligen Charakterisierung;
    - Integrieren (S6) der Sensormodelle in ein gemeinsames Fusionsmodell, wobei das Fusionsmodell eine Übertragung eines Eingangsvektors umfassend die sowohl am ersten inertialen Sensor als auch am zweiten inertialen Sensor jeweils erfassten physikalischen Größen auf einen Ausgangsvektor umfassend das jeweilige verarbeitbare Sensorsignal eines jeweiligen Sensors als Antwort auf die in Haupt-Sensitivität und in Kreuz-Sensitivität jeweils erfassten physikalischen Größen angibt; und
    - Ermitteln (S7) eines Kalibriermodells oder Kalibrieralgorithmus auf Basis des Fusionsmodells, wobei das Kalibriermodell bzw. der Kalibrieralgorithmus die Umkehrung des Fusionsmodells ist, sodass eine Eingangsgröße des Kalibriermodells aus verarbeitbaren Sensorsignalen des ersten inertialen Sensors und des zweiten inertialen Sensors zu einer Schätzung der tatsächlich vorherrschenden physikalischen Größen als Ausgangsgröße des Kalibriermodells bzw. des Kalibrieralgorithmus führt, wobei die Schätzung zumindest um reproduzierbare Sensorfehler kompensiert wird.

2. Verfahren nach Anspruch 1,
    wobei zwei inertiale Sensoren mit unterschiedlichen Sensortypen zum Erfassen von mehr als zwei unterschiedlichen physikalischen Größen verwendet werden.

3. Verfahren nach einem der vorhergehenden Ansprüche,
    wobei das Kalibriermodell bzw. der Kalibrieralgorithmus nicht-reproduzierbare Sensorfehler schätzt, wobei die Schätzung der Ausgangsgröße um reproduzierbare und nicht-reproduzierbare Sensorfehler kompensiert wird.

4. Verfahren nach einem der vorhergehenden Ansprüche,
    wobei mehrere erste inertiale Sensoren und/oder mehrere zweite inertiale Sensoren verwendet werden.

5. Verfahren nach den Ansprüchen 3 bis 4,
    wobei bei Verwendung von redundanten Sensoren ein derartiges Kalibriermodell bzw. Kalibrieralgorithmus verwendet wird, dass Beobachtbarkeit von nicht-reproduzierbaren Sensorfehlern für jeden der redundanten Sensoren vorliegt, indem der Nullraum des Fusionsmodells verwendet wird.

6. Verfahren nach einem der Ansprüche 3 oder 5,
    wobei der Kalibrieralgorithmus folgende Schritte umfasst:

    - Schätzen der physikalischen Größen durch Invertieren des Fusionsmodells unter Verwendung der verarbeitbaren Sensorsignale, und

- In den Schätzungen der physikalischen Größen: Kompensieren der reproduzierbaren und nicht-reproduzierbaren Sensorfehler mittels eines Kalman Filters angewendet auf die Abweichung zwischen den erwarteten Sensorsignalen basierend auf dem Fusionsmodell und den tatsächlichen Sensorsignalen.

7. Verfahren nach einem der vorhergehenden Ansprüche,

weiterhin aufweisend die Schritte:

- Ermitteln einer Charakterisierung eines dritten nicht-inertialen Sensors eines dritten Sensortyps bezüglich seiner Haupt-Sensitivität auf die durch ihn bestimmungsgemäß zu erfassende dritte physikalische Größe;
- Ermitteln einer Charakterisierung des ersten inertialen Sensors bezüglich seiner Kreuz-Sensitivität auf die durch ihn nicht bestimmungsgemäß zu erfassende dritte physikalische Größe;

wobei das Integrieren der Sensormodelle in ein gemeinsames Fusionsmodell so erfolgt, dass das Fusionsmodell eine Übertragung eines Eingangsvektors umfassend die sowohl am ersten inertialen Sensor als auch am zweiten inertialen Sensor als auch am dritten nicht-inertialen Sensor jeweils erfassten physikalischen Größen auf einen Ausgangsvektor umfassend das jeweilige verarbeitbare Sensorsignal eines jeweiligen Sensors als Antwort auf die in Haupt-Sensitivität und in Kreuz-Sensitivität jeweils erfassten physikalischen Größen angibt; und wobei das Kalibriermodell bzw. der Kalibrieralgorithmus auf Basis des Fusionsmodells so ermittelt wird, dass eine Eingangsgröße des Kalibriermodells aus verarbeitbaren Sensorsignalen des ersten inertialen Sensors und des zweiten inertialen Sensors und des dritten nicht-inertialen Sensors zu einer Schätzung der tatsächlich vorherrschenden physikalischen Größen als Ausgangsgröße des Kalibriermodells bzw. des Kalibrieralgorithmus führt, wobei die Schätzung zumindest um reproduzierbare Sensorfehler kompensiert wird.

8. Verfahren nach einem der vorhergehenden Ansprüche,
wobei für das jeweilige Sensormodell eines aus den folgenden verwendet wird:
Nichtlineares Zustandsraummodell, zu einem linearen Zustandsraummodell linearisierte nichtlineare Dynamik, quasi-linear-zeitvariantes Modell, lineares Zustandsraummodell.

9. Inertiale Messeinheit (IMU) mit einer Anordnung aus inertialen Sensoren mit zumindest zwei unterschiedlichen Sensortypen, die bestimmungsgemäß zum Erfassen mindestens zweier unterschiedlicher physikalischer Größen dienen, und mit einer Recheneinheit, die dazu ausgeführt ist, verarbeitbare Sensorsignale der inertialen Sensoren zu erfassen und in ein Kalibriermodell oder einen Kalibrieralgorithmus, welches/r nach einem der vorhergehenden Ansprüche erzeugt wurde, zu überführen und das Kalibriermodell bzw. den Kalibrieralgorithmus auszuführen, wobei ein Eingangsvektor des Kalibriermodells bzw. des Kalibrieralgorithmus das verarbeitbare Sensorsignal eines ersten inertialen Sensors eines ersten Sensortyps sowie das verarbeitbare Sensorsignal eines zweiten inertialen Sensors eines zweiten Sensortyps umfasst, wobei das verarbeitbare Sensorsignal des ersten inertialen Sensors Anteile bezüglich seiner Haupt-Sensitivität auf die durch ihn bestimmungsgemäß zu erfassende erste physikalische Größe und bezüglich seiner Kreuz-Sensitivität auf die durch ihn nicht bestimmungsgemäß zu erfassende zweite physikalische Größe umfasst, wobei das verarbeitbare Sensorsignal des zweiten inertialen Sensors Anteile bezüglich seiner Haupt-Sensitivität auf die durch ihn bestimmungsgemäß zu erfassende zweite physikalische Größe und bezüglich seiner Kreuz-Sensitivität auf die durch ihn nicht bestimmungsgemäß zu erfassende erste physikalische Größe umfasst, wobei das Kalibriermodell bzw. der Kalibrieralgorithmus eine Sensorfusion der durch Haupt-Sensitivitäten und Kreuz-Sensitivitäten gebildeten verarbeitbaren Sensorsignale der inertialen Sensoren unter Berücksichtigung der Haupt-Sensitivitäten und Kreuz-Sensitivitäten durchführt, wobei ein Ausgangsvektor des Kalibriermodells bzw. Kalibrieralgorithmus eine einzige jeweilige Schätzung der tatsächlichen ersten und zweiten physikalischen Größe umfasst, wobei die Schätzung zumindest um reproduzierbare Sensorfehler kompensiert wird.

10. Verfahren zum Kalibrieren einer Anordnung aus Sensoren mit mindestens zwei unterschiedlichen Sensortypen zum bestimmungsgemäßen Erfassen von mindestens zwei unterschiedlichen physikalischen Größen, wobei ein erster der Sensoren ein inertialer Sensor ist und ein zweiter der Sensoren ein nicht-inertialer Sensor ist, aufweisend die Schritte:

- Ermitteln (S1) einer Charakterisierung des ersten inertialen Sensors eines ersten Sensortyps bezüglich seiner Haupt-Sensitivität auf die durch ihn bestimmungsgemäß zu erfassende erste physikalische Größe;
- Ermitteln (S2) einer Charakterisierung des zweiten nicht-inertialen Sensors eines zweiten Sensortyps bezüglich seiner Haupt-Sensitivität auf die durch ihn bestimmungsgemäß zu erfassende zweite physikalische Größe;
- Ermitteln (S3) einer Charakterisierung des ersten inertialen Sensors bezüglich seiner Kreuz-Sensitivität auf die durch ihn nicht bestimmungsgemäß zu erfassende zweite physikalische Größe;
- Ermitteln (S4) einer Charakterisierung des zweiten nicht-inertialen Sensors bezüglich seiner Kreuz-Sensitivität auf die durch ihn nicht bestimmungsgemäß zu erfassende erste physikalische Größe;
wobei die jeweilige Charakterisierung ein modelliertes Übertragungsverhalten eines jeweiligen inertialen Sensors von einer jeweiligen vorherrschenden erfassbaren physikalischen Größe auf ein jeweiliges verarbeitbares Sensorsignal angibt;
- Erstellen (S5) eines jeweiligen Sensormodells auf Basis der jeweiligen Charakterisierung;
- Integrieren (S6) der Sensormodelle in ein gemeinsames Fusionsmodell, wobei das Fusionsmodell eine Übertragung eines Eingangsvektors umfassend die sowohl am ersten inertialen Sensor als auch am zweiten nicht-inertialen Sensor jeweils erfassten physikalischen Größen auf einen Ausgangsvektor umfassend das jeweilige verarbeitbare Sensorsignal eines jeweiligen Sensors als Antwort auf die in Haupt-Sensitivität und in Kreuz-Sensitivität jeweils erfassten physikalischen Größen angibt; und
- Ermitteln (S7) eines Kalibriermodells oder Kalibrieralgorithmus auf Basis des Fusionsmodells, wobei das Kalibriermodell bzw. der Kalibrieralgorithmus die Umkehrung des Fusionsmodells ist, sodass eine Eingangsgröße des Kalibriermodells aus verarbeitbaren Sensorsignalen des ersten inertialen Sensors und des zweiten nicht-inertialen Sensors zu einer Schätzung der tatsächlich vorherrschenden physikalischen Größen als Ausgangsgröße des Kalibriermodells bzw. des Kalibrieralgorithmus führt, wobei die Schätzung zumindest um reproduzierbare Sensorfehler kompensiert wird.

**Claims**

1. A method for the calibration of an arrangement of inertial sensors with at least two different sensor types for the detection of at least two different physical magnitudes in an intended manner, consisting of the steps:

   - determination (S1) of a characterisation of a first inertial sensor of a first sensor type regarding its main sensitivity to the first physical magnitude to be captured by it in the intended manner;
   - determination (S2) of a characterisation of a second inertial sensor of a second sensor type regarding its main sensitivity to the second physical magnitude to be captured by it in the intended manner;
   - determination (S3) of a characterisation of the first inertial sensor regarding its cross sensitivity to the second physical magnitude not to be captured by it in the intended manner;
   - determination (S4) of a characterisation of the second inertial sensor regarding its cross sensitivity to the first physical magnitude not to be captured by it in the intended manner;

   wherein the respective characterisation specifies a modelled transmission behaviour of a given inertial sensor from a respective predominant capturable physical magnitude to a respective processable sensor signal;

   - creation (S5) of a respective sensor model on the basis of the respective characterisation;
   - integration (S6) of the sensor modules into a common fusion model, wherein the fusion model specifies a transmission of an input vector comprising the physical magnitudes captured both at the first inertial sensor and also at the second inertial sensor to an output vector comprising the respective processable sensor signal of a respective sensor in response to the physical magnitudes captured in the main sensitivity and in the cross sensitivity; and
   - determination (S7) of a calibration model or calibration algorithm on the basis of the fusion model, wherein the calibration model or the calibration algorithm is the inversion of the fusion model, so that an input magnitude of the calibration model from processable sensor signals of the first inertial sensor and the second inertial sensor leads to an estimation of the actually predominant physical magnitudes as an output magnitude of the calibration model or of the calibration algorithm, wherein the estimation is compensated at least by reproducible sensor errors.

2. The method according to claim 1,
   wherein two inertial sensors with different sensor types are used for the capture of more than two different physical magnitudes.

3. The method according to any one of the preceding claims,
   wherein the calibration model or the calibration algorithm estimates non-reproducible sensor errors, wherein the estimation of the output magnitude is compensated by reproducible and non-reproducible sensor errors.

4. The method according to any one of the preceding claims,

wherein a plurality of first inertial sensors and/or a plurality of second inertial sensors are used.

5. The method according to claims 3 to 4,
wherein such a calibration model or calibration algorithm is used when use is made of redundant sensors, so that non-reducible sensor errors for each of the redundant sensors can be observed, whereby null space of the fusion model is used.

6. The method according to any one of claims 3 or 5,
wherein the calibration algorithm consists of the following steps:

- estimation of the physical magnitudes by inversion of the fusion model using the processable sensor signals, and
- in the estimates of the physical magnitudes: compensation of the reproducible and non-reproducible sensor errors by means of a Kalman filter used on the deviation between the expected sensors signals based on the fusion model and the actual sensor signals.

7. The method according to any one of the preceding claims,

also consisting of the steps:

- determination of a characterisation of third non-inertial sensor of a third sensor type regarding its main sensitivity to the third physical magnitude to be captured by it in the intended manner;
- determination of a characterisation of the first inertial sensor regarding its cross sensitivity to the third physical magnitude not to be captured by it in the intended manner;

wherein the integration of the sensor models into a common fusion model takes place in such a way that the fusion model specifies a transmission of an input vector comprising the physical magnitudes captured both at the first inertial sensor and also at the second inertial sensor and also at the third inertial sensor to an output vector comprising the respective processable sensor signal of a respective sensor as a response to the physical magnitudes captured respectively in the main sensitivity and in the cross sensitivity; and wherein the calibration model and the calibration algorithm is determined on the basis of the fusion model in such a way that an input magnitude of the calibration model from processable sensor signals of the first inertial sensor and the second inertial sensor and the third non-inertial sensor leads to an estimation of the actually predominant physical magnitudes as an output magnitude of the calibration model or the calibration algorithm, wherein the estimation is compensated at least by reproducible sensor errors.

8. The method according to any one of the preceding claims, wherein one of the following is used for the respective sensor model; non-linear state space model, non-linear dynamic linearised to a linear state space model, quasi-linear-time-variable model, linear state space model.

9. Inertial measurement unit (IMU) with an arrangement comprising inertial sensors with at least two different sensor types, which serve to capture at least two different physical magnitudes in an intended manner, and with a computing unit, which is designed to capture processable sensor signals of the initial sensors and to transfer them into a calibration model or a calibration algorithm which is being created according to any one of the preceding claims, and to execute the calibration model or the calibration algorithm, wherein an input vector of the calibration model or the calibration algorithm consists of the processable sensor signal of a first inertial sensor of a first sensor type and the processable sensor signal of a second inertial sensor of a second sensor type, wherein the processable signal of the first inertial sensor consists of portions regarding its main sensitivity to the first physical magnitude to be captured by it in the intended manner and regarding its cross sensitivity to the second physical magnitude not to be captured by it in the intended manner, wherein the processable sensor signal of the second inertial sensor consists of portions regarding its main sensitivity to the second physical magnitude to be captured by it in the intended manner and regarding its cross sensitivity to the first physical magnitude to be captured by it in the intended manner, wherein the calibration model and/or the calibration algorithm carries out a sensor fusion of the processable sensor signals of the inertial sensors formed by main sensitivities and cross sensitivities, taking account of the main sensitivities and cross sensitivities, wherein an output vector of the calibration model or the calibration algorithm consists of a single respective estimation of the actual first and second physical magnitude, wherein the estimation is compensated at least by reproducible sensor errors.

10. The method for the calibration of an arrangement of sensors with at least two different sensor types for the intended capture of at least two different physical magnitudes, wherein a first of the sensors is an inertial sensor and a second of the sensors as a non-inertial sensor, consisting of the steps:

- determination (S1) of a characterisation of the first inertial sensor of a first sensor type regarding its main sensitivity to the first physical magnitude to be captured by it in the intended manner;
- determination (S2) of a characterisation of a second non-inertial sensor of a second sensor type regarding its main sensitivity to the second physical magnitude to be captured by it in the intended manner;
- determination (S3) of a characterisation of the first inertial sensor regarding its cross sensitivity to the second physical magnitude not to be captured by it in the intended manner;
- determination (S4) of a characterisation of the second non-inertial sensor regarding its cross sensitivity to the first physical magnitude not to be captured by it in the intended manner;

wherein the respective characterisation specifies a modelled transmission behaviour of a respective inertial sensor from a respective predominant capturable physical magnitude to a respective processable sensor signal;

- determination (S5) of a respective sensor model on the basis of the respective characterisation;
- integration (S6) of the sensor modules into a common fusion model, wherein the fusion model specifies a transmission of an input vector comprising the physical magnitudes captured both at the first inertial sensor and also at the second non-inertial sensor to an output vector comprising the respective processable sensor signal of a respective sensor as a response to the physical magnitudes respectively captured in the main sensitivity and in the cross sensitivity; and
- determination (S7) of a calibration model or calibration algorithm on the basis of the fusion model, wherein the calibration model or the calibration algorithm is the inversion of the fusion model, so that an input magnitude of the calibration model from processable sensor signals of the first inertial sensor and the second non-inertial sensor leads to an estimation of the actually predominant physical magnitudes as the output magnitude of the calibration model or the calibration algorithm, wherein the estimation is compensated at least by reproducible sensor errors.

## Revendications

1. Procédé d'étalonnage d'un système composé de capteurs inertiels avec au moins deux types de capteurs différents pour la saisie conforme d'au moins deux grandeurs physiques différentes, comportant les étapes de :

- détermination (S1) d'une caractérisation d'un premier capteur inertiel d'un premier type de capteur concernant sa sensibilité principale à la première grandeur physique conformément à saisir par lui,
- détermination (S2) d'une caractérisation d'un deuxième capteur inertiel d'un deuxième type de capteur concernant sa sensibilité principale à la deuxième grandeur physique conformément à saisir par lui,
- détermination (S3) d'une caractérisation du premier capteur inertiel concernant sa sensibilité croisée à la deuxième grandeur physique conformément à saisir par lui,
- détermination (S4) d'une caractérisation du deuxième capteur inertiel concernant sa sensibilité croisée à la première grandeur physique conformément à saisir par lui,
sachant que la caractérisation respective indique un comportement de transmission modélisé d'un capteur inertiel respectif d'une grandeur physique saisissable prédominante respective à un signal de capteur traitable respectif,
- élaboration (S5) d'un modèle de capteur respectif sur la base de la caractérisation respective,
- intégration (S6) des modèles de capteur dans un modèle de fusion commun, sachant que le modèle de fusion indique une transmission d'un vecteur d'entrée comprenant les grandeurs physiques respectivement saisies aussi bien sur le premier capteur inertiel que sur le deuxième capteur inertiel sur un vecteur de sortie comprenant le signal de capteur traitable respectif d'un capteur respectif en tant que réponse aux grandeurs physiques respectivement saisies en sensibilité principale et en sensibilité croisée, et
- détermination (S7) d'un modèle d'étalonnage ou algorithme d'étalonnage sur la base du modèle de fusion, sachant que le modèle d'étalonnage ou l'algorithme d'étalonnage est l'inversion du modèle de fusion de telle manière qu'une grandeur d'entrée du modèle d'étalonnage composé de signaux de capteurs traitables du premier capteur inertiel et du deuxième capteur inertiel mène à une estimation des grandeurs physiques effectivement prédominantes sous la forme d'une grandeur de sortie du modèle d'étalonnage ou de l'algorithme d'étalonnage, sachant que l'estimation est compensée au moins de l'erreur de capteur reproductible.

2. Procédé selon la revendication 1,

sachant que deux capteurs inertiels avec des types de capteurs différents sont utilisés pour la saisie de plus de deux grandeurs physiques différentes.

3. Procédé selon l'une quelconque des revendications précédentes, sachant que le modèle d'étalonnage ou l'algorithme d'étalonnage estime des erreurs de capteur non reproductibles, sachant que l'estimation de la grandeur de sortie est compensée de l'erreur de capteur reproductible et non reproductibles.

4. Procédé selon l'une quelconque des revendications précédentes, sachant que plusieurs premiers capteurs inertiels et/ou plusieurs deuxièmes capteurs inertiels sont utilisés.

5. Procédé selon les revendications 3 à 4, sachant que lors de l'utilisation de capteurs redondants, un modèle d'étalonnage ou algorithme d'talonnage de ce type est utilisé de telle sorte qu'il existe une possibilité d'observation d'erreurs de capteur non reproductibles pour chacun des capteurs redondants, l'espace nul du modèle de fusion étant utilisé.

6. Procédé selon l'une quelconque des revendications 3 ou 5, sachant que l'algorithme d'étalonnage comprend les étapes suivantes :

   - estimation des grandeurs physiques par inversion du modèle de fusion en utilisant les signaux de capteur traitables, et
   - dans les estimations des grandeurs physiques : compensation des erreurs de capteur reproductibles et non reproductibles au moyen d'un filtre de Kalman utilisé sur l'écart entre les signaux de capteur attendus en se basant sur le modèle de fusion et les signaux de capteur effectifs.

7. Procédé selon l'une quelconque des revendications précédentes, comprenant en plus les étapes de :

   - détermination d'une caractérisation d'un troisième capteur non inertiel d'un troisième type de capteur concernant sa sensibilité principale à la troisième grandeur physique à saisir conformément par lui,
   - détermination d'une caractérisation du premier capteur inertiel concernant sa sensibilité croisée à la troisième grandeur physique à saisir conformément par lui, sachant que l'intégration des modèles de capteur a lieu dans un modèle de fusion commun de telle sorte que le modèle de fusion indique une transmission d'un vecteur d'entrée comprenant les grandeurs physiques respectivement saisies tant sur le premier capteur inertiel que sur le deuxième capteur inertiel ainsi que sur le troisième capteur non inertiel sur un vecteur de sortie comprenant le signal de capteur traitable respectif d'un capteur respectif en tant que réponse aux grandeurs physiques respectivement saisies dans la sensibilité principale et dans la sensibilité croisée et sachant que le modèle d'étalonnage ou l'algorithme d'étalonnage est déterminé sur la base du modèle de fusion de telle manière qu'une grandeur d'entrée du modèle d'étalonnage composée de signaux de capteur traitables du premier capteur inertiel et du deuxième capteur inertiel et du troisième capteur non inertiel mène à une estimation des grandeurs physiques effectivement prédominantes en tant que grandeur de sortie du modèle d'étalonnage ou de l'algorithme d'étalonnage, sachant que l'estimation est compensée au moins des erreurs de capteur reproductible.

8. Procédé selon l'une quelconque des revendications précédentes, sachant que pour le modèle de capteur respectif, on utilise un des modèles suivants : modèle d'espace d'état non linéaire, dynamique non linéaire linéarisée en un modèle d'espace d'état linéaire, modèle quasi linéaire variable en temps, modèle d'espace d'état linéaire.

9. Unité de mesure inertiel (IMU) avec un système composé de capteurs inertiels avec au moins deux types de capteurs différents, qui servent conformément à la saisie d'au moins deux grandeurs physiques différentes et avec une unité de calcul qui est réalisée à cet effet pour saisir des signaux de capteur traitables des capteurs inertiels et transférer dans un modèle d'étalonnage ou un algorithme d'étalonnage, lequel a été produit selon l'une quelconque des revendications précédentes et exécuter le modèle d'étalonnage ou l'algorithme d'étalonnage, sachant qu'un vecteur d'entrée du modèle d'étalonnage ou de l'algorithme d'étalonnage comprend le signal de capteur traitable d'un premier capteur inertiel d'un premier type de capteur ainsi que le signal de capteur traitable d'un deuxième capteur inertiel d'un deuxième type de capteur, sachant que le signal de capteur traitable du premier capteur inertiel comprend des parties concernant sa sensibilité principale à la première grandeur physique conformément à saisir par lui et concernant sa sensibilité croisée à la deuxième grandeur physique à saisir de façon non conforme par lui, sachant que le signal de capteur traitable du deuxième capteur inertiel comprend des parties concernant sa sensibilité principale à la deuxième grandeur physique à saisir conformément par lui et concernant sa sensibilité croisée à la première grandeur physique conformément à saisir par lui, sachant que le modèle d'étalonnage ou l'algorithme d'étalonnage exécute une fusion de capteurs des signaux de capteur traitables formés par les sensibilités principales et les sensibilités croisées des capteurs inertiels en tenant compte des sensibilités principales et des sensibilités croisées, sachant qu'un vecteur de sortie du modèle d'étalonnage ou de l'algorithme d'étalonnage comprend une estimation unique respective de la première et de la deuxième grandeur physique effectives, sachant que l'estimation est compensée au moins des erreurs de capteur reproductibles.

10. Procédé d'étalonnage d'un système composé de capteurs avec au moins deux types de capteurs différents pour la saisie conforme d'au moins deux grandeurs physiques différentes, sachant qu'un premier des capteurs est un capteur inertiel et qu'un deuxième des capteurs est un capteur non inertiel, comportant les étapes de :

- détermination (S1) d'une caractérisation du premier capteur inertiel d'un premier type de capteur concernant sa sensibilité principale à la première grandeur physique à saisir conformément par lui,
- détermination (S2) d'une caractérisation du deuxième capteur non inertiel d'un deuxième type de capteur concernant sa sensibilité principale à la deuxième grandeur physique conformément à saisir par lui,
- détermination (S3) d'une caractérisation du premier capteur inertiel concernant sa sensibilité croisée à la deuxième grandeur physique conformément à saisir par lui,
- détermination (S4) d'une caractérisation du deuxième capteur non inertiel concernant sa sensibilité croisée à la première grandeur physique conformément à saisir par lui,
sachant que la caractérisation respective indique un comportement de transmission modélisé d'un capteur inertiel respectif d'une grandeur physique saisissable prédominante respective à un signal de capteur traitable respectif,
- élaboration (S5) d'un modèle de capteur respectif sur la base de la caractérisation respective,
- intégration (S6) des modèles de capteur dans un modèle de fusion commun, sachant que le modèle de fusion indique une transmission d'un vecteur d'entrée comprenant les grandeurs physiques respectivement saisies aussi bien sur le premier capteur inertiel que sur le deuxième capteur non inertiel sur un vecteur de sortie comprenant le signal de capteur traitable respectif d'un capteur respectif en tant que réponse aux grandeurs physiques respectivement saisies en sensibilité principale et en sensibilité croisée, et
- détermination (S7) d'un modèle d'étalonnage ou algorithme d'étalonnage sur la base du modèle de fusion, sachant que le modèle d'étalonnage ou l'algorithme d'étalonnage est l'inversion du modèle de fusion de telle manière qu'une grandeur d'entrée du modèle d'étalonnage composé de signaux de capteur traitables du premier capteur inertiel et du deuxième capteur non inertiel mène à une estimation des grandeurs physiques effectivement prédominantes sous la forme d'une grandeur de sortie du modèle d'étalonnage ou de l'algorithme d'étalonnage, sachant que l'estimation est compensée au moins des erreurs de capteur reproductibles.

Fig. 1

| S1 |
|---|
| S2 |
| S3 |
| S4 |
| S5 |
| S6 |
| S7 |

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102018220543 A1
- US 20140372063 A1